# EUROPÄISCHE PATENTSCHRIFT

(11) **EP 1 332 933 B1**
(45) Veröffentlichungstag und Bekanntmachung des Hinweises auf die Patenterteilung: **02.05.2012**
(21) Anmeldenummer: 03005907.5
(22) Anmeldetag: 02.02.2001
(51) Int. Cl.: B60R 22/48, B64D 25/06

(54) **Vorrichtung zum Erfassen der Gurtbenutzung und Lebensdauer der Rückhaltesysteme**
Device for determining the use of a belt and the service life of a restraint system
Dispositif pour déterminer l'utilisation d'une ceinture et la durée de vie d'un système de retenue

(30) Priorität: 03.03.2000 DE 10010415
(43) Veröffentlichungstag der Anmeldung: 06.08.2003
(62) Teilanmeldung aus: 01925285.7
(73) Patentinhaber: Go, Giok Djien, Dr.-Ing., 65510 Idstein (DE)
(72) Erfinder: Go, Giok Djien, Dr.-Ing., 65510 Idstein (DE)

(56) Entgegenhaltungen:
- FR-A- 2 673 898
- US-A- 4 702 492
- US-A- 5 618 059
- PATENT ABSTRACTS OF JAPAN Bd. 010, Nr. 200 (M-498), 12. Juli 1986 (1986-07-12) & JP 61 044055 A (FUJITSU TEN LTD;OTHERS: 01), 3. März 1986 (1986-03-03)

## Beschreibung

Die Erfindung betrifft
- eine für ein mit Rückhaltesystemen ausgerüstetes Transportmittel vorgesehene Vorrichtung
   * zum Überwachen und Aufzeichnen der Benutzer und Nichtbenutzer des Sicherheitsgurtes während einer Reise und bei einem Unfall und der Lebensdauer jedes Rückhaltesystems,
   * zur Erhöhung der Gurtbenutzungsrate und
   * zum Erstellen einer Beweiskette der Benutzung und Nichtbenutzung der Sicherheitsgurte sowie der Unfalldaten sowie
- ein Verfahren zum Nachweis für eine Manipulation und zum Schutz der Beweiskette und der Daten vor Manipulationen.

Eine derartige Vorrichtung gemäß Oberbegriff 1 des Patentanspruches 1 ausschließlich zum Nachweis für Benutzung und Nichtbenutzung der Sicherheitsgurte ist aus den US 4,667,336, US 4,702,492, US 5,119,407 und US 6,204,757 B1 bekannt.

Zwecks Vereinfachung der Formulierung werden folgende Begriffe für die exakten Bezeichnungen eingeführt:

| **Begriff:** | **exakte Bezeichnung:** |
|---|---|
| "Transportmittel" | Kraftfahrzeug (PKW, Schulbus, Bus, LKW), Zug (Eisenbahn), Schiff (Rennboot) oder Flugzeug |
| "Unfall" | Beinaheunfall, beliebige Kollision, realer Unfall, Multi-Crash, turbulenzbedingter Flug oder Multi-Turbulenz |
| "zeitliche Ableitung der Drehwinkel "Aₓ", "A_{y}" und "A_{z}"" | Giergeschwindigkeit "Å_{z}" um die z_{S}-Achse, Nickgeschwindigkeit "Åₓ" um die xs-Achse und Rollgeschwindigkeit "Å_{y}" um die y_{S}-Achse des Schwerpunktes "S" des Transportmittels (**Fig**. 4) oder Gierbeschleunigung "Ä_{z}", Rollbeschleunigung "Ä_{y}" und Nickbeschleunigung "Äₓ" |
| "Gurtbenutzung durch den Insassen" | Durch die Gurtbenutzung wird der Insasse (Baby, Kind oder Erwachsener) zurückgehalten |
| "Speichermedium" | RAM **80.1** oder Datenträger **92, 92a** |
| "erster Gurtbenutzer" | Fahrer, Pilot oder einer der angegurteten Insassen, der als der erste Gurtbenutzer vorgesehen ist. |

Bei einer Fahrt eines Kraftfahrzeuges außer von Schulbussen und Bussen oder bei auftretenden Turbulenzen während eines Fluges eines Flugzeuges müssen die Insassen angeschnallt sein. Bekannt sind Zweipunkt-Sicherheitsgurte, die man häufig in der Form eines Beckengurtes für den Mittelsitz einer Rückbank in Kraftfahrzeug antrifft, welche in nahezu gleicher Anordnung für die Passagiere im Flugzeug zur Verfügung stehen. Dieser Beckengurt bietet jedoch gegenüber dem herkömmlichen Dreipunkt-Sicherheitsgurt einen entscheidend geringeren Schutz bei Unfällen.
Leider sichert der Dreipunkt-Sicherheitsgurt den unsymmetrisch angeschnallten Insassen bei Unfällen unzureichend.
Weiterhin ist bei diesem Gurtsystem das so genannte "Submarining" zu beobachten. Hierbei taucht der angeschnallte Insasse unter dem Gurt hindurch, womit seine Schutzwirkung verloren geht. Im Gutachten könnte es heißen, dass der Insasse nicht angegurtet gewesen sei.

Gemäß DE-U 296 13 291 ist ein Gurtschloss mit einem Sensor zur Erfassung der Steckverbindung der Schlosszunge mit ihm und einem anderen Sensor zur Erfassung der Grundeinstellung der Sitzrückenlehne versehen.
Um es zu manipulieren, stehen 600 Insassen eines A380 vor ihren jeweiligen Sitzen, stecken die Schlosszungen in die zugehörigen Gurtschlösser ein, bringen die zugehörigen Sitzrückenlehnen in die Grundeinstellung und, beispielsweise, gehen zum Tanzen in der Diskothek-Halle trotz der dringenden Aufforderung des Kapitäns "Platz nehmen und anschnallen".

Aus der gattungsbildenden US 4,702,492 (DE-A 35 13 339) geht ein Gurtschloss hervor, dessen Vorrichtung Manipulationen, Nichtbenutzung oder Benutzung der Gurte bei einem Unfall nachweist. Die Vorrichtung umfasst einen Tiefpass, einen mit einer Sicherung versehenen Gurtschalter und eine mit einer anderen Sicherung versehene Messdose (Zugschalter), die bei einem Unfall die Gurtkraft infolge der Massenträgheitskraft des zurückgehaltenen Insassen misst und deren Sicherung bei Überschreitung einer vorbestimmten Massenträgheitskraft als Schwellwert schmilzt. Bei einem Unfall gibt ein Beschleunigungssensor Strom als Signal über den Tiefpass zum Messdosen- und Gurtschaltereingang frei. Daraus resultiert einer der vier Fälle in Abhängigkeit des Zustandes der beiden Sicherungen, um eine Manipulation, Nichtbenutzung oder Benutzung des Gurtes zu beurteilen. Die Gurtbenutzung wird nachgewiesen, wenn die Sicherung der Messdose schmilzt, nicht jedoch die Sicherung des Gurtschalters. In folgenden Fällen versagt die Beweissicherung, da die Sicherung der Messdose intakt geblieben ist, und zwar wegen geringerer Massenträgheitskraft
- eines Kindes, einer Frau oder eines 70 kg schweren Mannes, wenn die Messdose auf einen beleibten Mann von 150 kg abgestimmt ist, oder
- bei Unfällen mit geringerer Aufprallgeschwindigkeit, wenn die Messdose auf eine Aufprallgeschwindigkeit von 120 km/h abgestimmt ist.
Lt. der deutschen Zeitung FAZ vom 07.10.2001 rief einer der drei größten Autohersteller der Welt 1,4 Millionen Kraftfahrzeuge aus dem Baujahr 2001 wegen defekter Steckverbindung der Schlosszungen mit herkömmlichen Gurtschlössern in die Werkstätte zurück. Teile des Gurtschlosses und der schocksicheren Einrichtung und zusätzliche Teile wie die Messdose, die Reihenschaltung und die Sicherungen lassen sich im herkömmlichen Gehäuse nicht unterbringen. Ein größeres Gehäuse muss konzipiert werden, um alle diese Teile aufzunehmen. Daraus ergeben sich folgende Probleme:
- Um den Zustand der Schocksicherung bei Unfällen sicherzustellen, müssen neue Gurtschlösser intensiven, langfristigen und kostspieligen Tests unterzogen werden.
- Für Versagen in Zusammenhang mit kostspieligen Rückrufaktionen und Reparaturen sind neue Gurtschlösser mit den o.g. Merkmalen umso anfälliger. Vor allem in den USA wird diese Beweisführung gerichtlich abgelehnt, weil der Beweis nicht immer zuverlässig ist.
- Welcher Autohersteller wagt es, Millionen von Dollar an Schadenersatz für eventuelle Opfer, den Verlust des guten Rufes und sinkende Verkaufszahlen in den USA sowie große Investitionen für die Entwicklung der neuen Gurtschlösser mit ungewissem Ausgang zu riskieren?
Frühzeitig haben die Erfinder erkannt, dass Manipulationen und/oder Bedienungsfehler die Beweise unglaubwürdig machen. Manipulationen und/oder Bedienungsfehler beim Einstecken der Schlosszunge **9** ins Gurtschloss **9.1** werden vier oder acht Fällen nach Tabelle 1 oder 2 der US 4,702,492 zugeordnet. Bei 600 Insassen eines AIRBUS A380 müssen 2400 oder 4800 Fälle überprüft werden. Solche zeitintensive Kontrolle ist teuer.

Die beiden gattungsbildenden US 5,119,407 und US 4,667,336 haben Maßnahmen für die Gurtbenutzung und das Aufzählen der Gurtbenutzungen zum Inhalt. Kann der Autobesitzer eine große Zahl von Gurtbenutzungen nachweisen, dann sollte ihm ein Bonus für die Versicherungsprämie gewährt werden. Entlang jedes Gurtabschnittes der Schlosszunge und des Gurtschlosses ist eine Stromleitung angeordnet. Bei Steckverbindung der Schlosszunge mit dem Gurtschloss fließt Strom in die beiden Stromleitungen, wodurch ein Zähler betätigt wird, um die Zahl der Gurtbenutzungen zu erhöhen. Durch unzähliges Einstecken lässt es sich leicht manipulieren. Infolge großer Vorverlagerung eines angegurteten, schweren Insassen dehnen sich die beiden Gurtabschnitte aus, so dass beide Stromleitungen auseinander reißen.

Gemäß US 5,618,059 hat eine Vorrichtung ein am Fahrzeugboden befestigtes Gehäuse, von dessen Innenraum ein aus einem C-förmigen, oberen und unteren Teil bestehender Energieabsorber und ein an dem oberen Teil befestigter Schlosshalter des Gurtschlosses geführt sind. Ein Querloch des unteren Teiles ist mit einem Querelement des Gehäuses formschlüssig verbunden. Am Innenraum ist ein Schalter angebracht. Wie lassen sich die drei Teile zu der Vorrichtung zusammenbauen?
Zweifelhaft sind ihre Merkmale für Gurtbenutzung und Abbau der Gurtkraft. Wird der Schlosshalter durch große Gurtkraft belastet, dann wären die Dehnungen beider Teile gleich groß. Damit sollte ein am Schlosshalter angebrachter Nocken eine Verschiebung nach Berührung einer Kante des Schlosshalters mit dem Querelement erfahren, so dass der Nocken den Schalter aktivieren könnte. Dadurch würde ein Aufleuchten einer Anzeigelampe als Beweis für die Gurtbenutzung liefern. Wegen höherer Steifigkeit des C-förmigen Teiles und des Gehäuses ist die Dehnung des oberen Teiles im Innenraum äußerst gering! Die Hypothesen, dass die Dehnungen beider Teile gleich groß sind, die Verschiebungen des Nocken und der Kante gleich groß sind und der Energieabsorber die Gurtkraft abbaut, sind eindeutig falsch.

Gemäß der gattungsbildenden US 6,204,757 B1 umfasst eine Vorrichtung.
1. Gurtschalter **9.5**, **9.5a** zum Erfassen der Benutzung und Nichtbenutzung der Gurte,
2. einen Hall Sensor 30 zum Erfassen der Fahrzeuggeschwindigkeit,
3. einen GPS-Empfänger 50 zum Erfassen der Positionierung des Fahrzeuges und
4. ein Programm **80.3** zur Verarbeitung der Gurtbenutzungen, Geschwindigkeit und Positionierung des Fahrzeuges zu Daten, zum Speichern der Daten in einem Speichermedium **80.1, 92a** und Abrufen.
Daraus stellen sich folgende Probleme heraus:
- Im Gegensatz zu den Erfindern der US 4,702,492 haben sich die Erfinder keine Gedanken gemacht, dass Gauner in der Lage sind, den Nachweis für Benutzung und Nichtbenutzung der Gurte in kurzer Zeit [A9] zu manipulieren.
- Zwecks Manipulation nehmen Insassen, die sich nicht anschnallen wollen, Platz, nachdem sie die Gurtzungen in die zugehörigen Gurtschlösser eingesteckt haben. Das Fehlen einer Kontrolleinrichtung gemäß Anspruch 5 oder 23 zum Generieren eines zweiten Nachweises für Benutzung und Nichtbenutzung der Gurte erschwert Gerichten, eindeutige Urteile auszusprechen.
- Neue Daten der Benutzung und Nichtbenutzung der Gurte usw. gehen immer verloren, wenn das Speichermedium voll ist.
- Leider kann die Vorrichtung die Überschreitung der Lebensdauer der Sicherheitsgurte wie das Versagen der Blockierung [U170301] und den Riss des Gurtes [A12] nicht erfassen.

Folgende Fälle bei Unfällen machen deutlich, dass ein zuverlässiges Beweismittel für die Gurtbenutzung durch die Insassen fehlt:
- Wenn das Lenkrad und die Lenksäule durch den Kopf eines weit vorverlagerten Fahrers deformiert werden, dann besteht bei Gutachtern der Anfangsverdacht, dass er nicht angegurtet war. Durch eine mikroskopische Untersuchung wurden die Spuren an den Oberflächen des Gurtabschnittes **1.4,** der während des Einziehens der Gurtabschnitte **1.2, 1.3** durch den Gurtstrammer **190** bei der Frontkollision durch die Klemmeinrichtung **14** festgeklemmt worden war, bestätigt. Ob diese Spuren doch nicht durch das weiche Klemmen beider Klemmbacken verursacht wurden, ist dahin gestellt.
- Stellt der Gutachter keine Reibspuren an der Oberfläche der Schlosszunge **9,** des Umlenkers **12** und Gurtes fest, dann lautet sein Urteil: die Insassen waren nicht angegurtet [U170301]. Der Beweis ist nicht eindeutig. Daher lassen US Gerichte ihn nicht zu.
- Bedingt durch die große Energie während eines turbulenzbedingten Fluges werden sowohl die nichtangegurteten Insassen als auch die meisten der durch unbrauchbare Beckengurte angegurteten Insassen schwer/tödlich verletzt. Nach der Rettung und der ärztlichen Versorgung weiß keiner vom Bordpersonal, wer nicht angegurtet war. Der Fluggesellschaft bleibt nichts anders übrig, als die Behandlungskosten aller Verletzten, von denen einige, die Aufforderung zum Anschnallen ignoriert haben, zu übernehmen und die von US-Gerichten festgesetzten Schadenersatzsummen zu zahlen. Es fehlen Beweise dafür, welche Insassen während des Fluges nicht angegurtet waren.

Bei Rückhalterung des Insassen werden die Gurtabschnitte durch den Umlenkbeschlag umgelenkt, durch den Gurtaufroller ein- oder aufgerollt und zwecks Auffangen des vorverlagerten Oberkörpers durch dessen Klemmeinrichtung bei Überschreitung eines Schwellwertes
- durch geringe Verzögerung bei langsamer Fahrt weich (schonend) geklemmt oder
- durch starke Verzögerung bei Unfall oder schneller Fahrt blockiert.
Im Prüfverfahren muss jeder Gurtaufroller 100000 Gurtauszüge und jede Klemmeinrichtung 20000 Blockierungen unter einer Wechsellast von ± 300 N bestehen. Bei 50 % Offset Crash Tests verschiedener europäischer Fahrzeuge bei v = 55 km/h liegen die Gurtkräfte zwischen 3000 bis 9130 N bei optimaler Auslösung der Airbags. Wegen Notbremsungen mit Verzögerung von über 1 g während einer schnelleren und hektischen Fahrt ist eine hohe Zahl von Blockierungen unter größeren Gurtkräften zu erwarten. Somit unterliegen der Sicherheitsgurt und das Paar Klemmbacken (Klemmrollen) der Klemmeinrichtung hohem Verschleiß, der die Schutzwirkung entscheidend beeinträchtigt. Dadurch bewegt sich der Oberkörper bei einem Frontaufprall zu weit nach vorne, mit der Folge schwerer/tödlicher Kopfverletzung wegen des Zusammenpralls mit dem korrekt ausgelösten Airbag und/oder des Aufpralls gegen das Lenkrad usw. Wegen des Abnutzens der beidseitigen Oberflächen des Gurtgewebes sinken die Reibwerte bei Blockierung des Gurtgewebes zwischen den Klemmbacken drastisch, z.B. von 0,8 auf 0,1. Wegen der fehlenden Blockierung können Rückhaltesysteme die Insassen bei Unfällen in keiner Weise zurückhalten [U170301]. Beim Überschlagen werden die Insassen aus der Rückhalterung befreit und gegen die Fahrzeug- oder Flugzeugteile geschleudert. Da der Gesetzgeber die Lebensdauer nicht vorschreibt, liegt die Verantwortung somit bei den Automobil- und Flugzeugherstellem oder den Fluggesellschaften. Schließlich müssen sie für alle Kosten aufkommen.
Es fehlt eine Vorschrift zur Festlegung der Lebensdauer der Teile der Rückhaltesysteme und zum Austausch derselben.

Der Erfindung liegt mithin die Aufgabe zugrunde,
- eine für das Überwachen und Aufzeichnen der Benutzer und Nichtbenutzer des Sicherheitsgurtes während einer Reise und bei einem Unfall sowie der Lebensdauer jedes Rückhaltesystems, für die Erhöhung der Gurtbenutzungsrate und für das Erstellen einer Beweiskette der Benutzung und Nichtbenutzung der Sicherheitsgurte sowie der Unfalldaten vorgesehene Vorrichtung, die konstruktiv einfach, zuverlässig und äußerst preiswert ist, und
- ein Verfahren, das eine Manipulation nachweist und die Beweiskette und Daten vor Manipulationen schützt,
zu schaffen.

Die Lösung dieser Aufgabe erfolgt erfindungsgemäß durch die Merkmale des Patentanspruches 1.
Es ist schon öfter vorgekommen, dass Airbags bei den Front- und Seitenkollisionen nicht ausgelöst wurden oder Airbags beim Fahren über Schlaglöcher ausgelöst wurden. Grundsätzlich werden die Airbags beim Heckaufprall oder Überschlagen nicht ausgelöst. Ausgenommen ist Volvo S80, der mit einem Sensor zur Erfassung einer Heckkollision ausgestattet ist, um die WHIPS Vorrichtungen für Fahrer und Beifahrer zu aktivieren. Leider stellt die fehlerhafte Auslösung der beiden Frontairbags des Volvo S80 beim durch IIHS (Insurance Institute for Highway Safety) in USA durchgeführten Crashtest auf 5 mph die Zuverlässigkeit der von Sensoren aktivierten WHIPS Vorrichtung in Frage. Keine Frontairbags eines 19-monatigen, 140000 € teuren deutschen Sportwagens wurden bei einem Frontaufprall bei 50 bis 80 km/h ausgelöst. Weiterhin belegten die Rückrufaktionen, ausgerechnet, der Premium Fahrzeuge und über 150 000 € teuren Premium Sportwagen, die Unzuverlässigkeit der Sensoren, Elektronik und/oder Software. Defekte Steckerverbindung, defekte Software und/oder defekte Elektronik waren die Ursache für die Nicht- oder Fehlauslösung der Airbags. Es steht fest, dass die Vorrichtung **30, 30a-30c** keinen Beweis beim Heckaufprall oder Überschlagen wegen fehlenden Sensoren oder bei realen Unfällen wegen der o.g. Defekte liefert. Dagegen ist die Vorrichtung **30d-30f** imstande, den Verschleiß der Teile der Rückhaltesysteme und den Zeitverlauf der Benutzung und Nichtbenutzung der Gurte über lange Zeit vor dem Unfall aufzuzeichnen. Im schlimmsten Fall, wenn die Sensoren beim Unfall versagen, liegt ein Beweis vor. Somit ermöglicht die auf allen Merkmalen des Patentanspruches 1 aufbauende Vorrichtung **30d-30f,** einen gerichtlich einwandfreien Beweis bei einem realen Unfall zu erstellen. Allerdings können Gauner ihn manipulieren! Siehe Gegenmaßnahmen in Ansprüchen 5 und 22.
Von 48458 brandneuen deutschen Premiumfahrzeugen waren 219 wegen der Überlastung der Batterie, Defekte der Elektronik, Software usw. stehen geblieben. Wegen des zunehmenden Anteiles der elektronischen Komponente in einem Neufahrzeug und wegen steigender Anforderungen an die Software, beispielsweise zur Deaktivierung des Beifahrer-Airbags und zum Schutz gegen Überhitzung der Motoren für Öffnen und Schließen der Türe durch dauerhafte Betätigung des Funkschlüssels, treten Fehlerquellen, Störungen und/oder Überlagerung der Amplituden und Frequenzen auf. Dies führt zu einem Blackout der Software (Programm **80.3**).
Die Maßnahmen gegen Autodiebstähle haben Autohersteller gerühmt. Stunden müssen verbraucht werden, um die als "sicher" klassifizierten Wegfahrsperren zu manipulieren. Gerade zehn Minuten [A9] benötigten die Experten unter den Autodieben, um das Programm für die Wegfahrsperren der deutschen Top-Premiumfahrzeuge zu überwinden. Somit kann ein Experte die Vorrichtung entweder vor einem Unfall oder nach dem Unfall manipulieren, um den ersten Beweis der Benutzung der Gurte für ein Gericht zu besitzen und einen hohen US-Schadenersatz bei einem realen Unfall zu sichern. Falls zuverlässigere Sensoren der kommenden Generation, woran der Anmelder arbeitet, zum Einsatz kommen werden, liefert die Vorrichtung **30, 30a-30c** dem Gericht einen zweiten Beweis, der die Nichtbenutzung der Gurte und die Manipulation des ersten Beweises eindeutig nachweist.
Der Hauptanspruch 1 in Verbindung mit Anspruch 5 und Aufprallelementen gemäß DE 10010415 C1 und CA 2399917 erfüllt somit die strenge Anforderung an eine gerichtlich zuverlässige, vor Manipulationen geschützte Beweiskette, dank deren
- Gerichte eindeutige Urteile fällen können,
- Autohersteller oder Fluggesellschaften von Zahlung eines Schadenersatzes und Übernahme von ärztlichen Behandlungskosten wegen der Nichtbenutzung der Gurte freigesprochen werden,
- die Gurtbenutzung des auf der Baby-Schale liegenden, durch den Beifahrer-Gurt gesicherten Babys trotz der Deaktivierung aller Beifahrer-Airbags bestätigt wird [A7, A7A], und
- alle Nachteile des Standes der Technik gelöst und Manipulationen, Bedienungsfehler und die o.g. Defekte nachgewiesen werden. Stimmen die durch die Vorrichtung **30f** und Aufprallelemente generierten Beweise untereinander nicht überein, besteht der Verdacht auf eine Manipulation und/oder auf einen Defekt der Sensoren, Software und/oder Elektronik. Die Kontrolle ist viel einfacher, schneller und genauer als die gemäß US 4,702,492.
Zweifelsohne ist der hohe Aufwand für das Erlangen solcher gerichtlich einwandfreien Beweiskette aus folgenden Gründen zu rechtfertigen:
- Das Bundesgericht in Charleston, USA, verurteilte einen Autohersteller endgültig zur Zahlung des höchsten Schadenersatzes von 259 Millionen Dollar an die Eltern eines vermutlich nichtangegurteten Jungen, der aus der Hecktür eines Minivans herausgeschleudert wurde. Wegen der hohen Rate der Nichtbenutzung der Gurte bei Fahrten und Flügen sind die Automobil- und Flugzeughersteller sowie die Fluggesellschaften umso mehr der Gefahr einer Verurteilung ausgesetzt. In den USA muss der Hersteller dem Gericht zuverlässiges und schlüssiges Beweismaterial im Sinne einer Beweisumkehrlast erbringen.
- Wegen des Versagens der Blockierung [U170301], Risses des Gurtes [A12], des nicht praxisbezogenen Prüfverfahrens und der hohen Schadenersatzsummen in USA [A1, A12] ist der Einsatz der Vorrichtung in Zusammenarbeit mit Aufprallelementen gemäß DE 10010415 C1 zum Erfassen der Lebensdauer der Sicherheitsgurte usw. ratsam.
- Dank der Vorrichtung werden die Zeitpunkte der Gurtbenutzungen, der Zeitpunkt des Unfalles oder die Zeitpunkte mehrfacher Unfälle oder mehrmaliger Turbulenz, die wichtigen Unfalldaten, wie Temperatur usw., und der Zustand der Rückhaltesysteme dokumentiert sowie die in einem Datenträger oder der Blackbox gespeicherten Beweiskette und Daten vor Manipulationen geschützt.

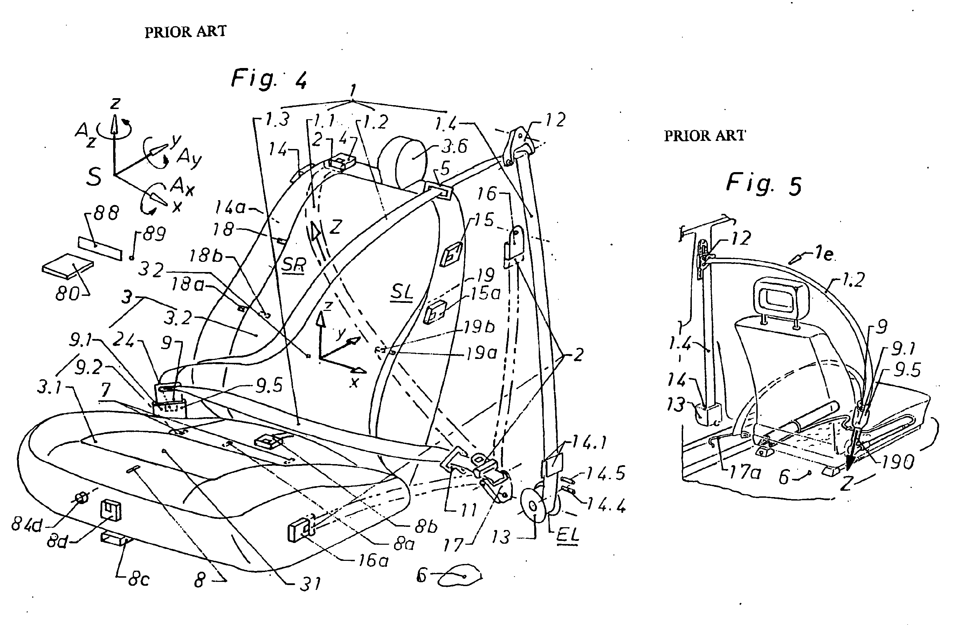

Die Unteransprüche beschreiben vorteilhafte Ausbildungen der Erfindung.
Die erfindungsgemäße Vorrichtung weist folgende Vorteile auf:
- Ist die Vorrichtung **30a, 30c** nur mit einer einzigen Anzeigelampe für eine Überprüfung ihrer Funktion ausgestattet, fallen niemandem die Sicherungen als Anzeigeelemente für Benutzung und Nichtbenutzung der Gurte auf. Durch Verstecken der Sicherungen kann die Arbeit zur Versiegelung erspart werden.
- Beim Offset-Front-, -Seiten- oder -Heckaufprall, der anschließend in einem Überschlagen endet, ist es vorgekommen, dass die Insassen aus der Rückhalterung befreit und während des Überschlagens aus dem Fahrzeug, dessen Türen entriegelt sind, herausgeschleudert werden. Belegbar ist dies durch die Unfallforschung des Anmelders bei zahlreichen Unfallfahrzeugen verschiedener Automobilhersteller. Da die Sensoren die Verzögerung beim Überschlagen bzw. Seiten- oder Heckaufprall nicht einwandfrei erfassen, kommt es vor, dass der Gurtstrammer **190** die Gurtabschnitte **1.2, 1.3** nicht einzieht und/oder die Klemmeinrichtung **14** (**Fig.** 4) den Gurtabschnitt **1.4** nicht blockiert. Trotz der Gurtbenutzung sind keine Spuren am Gurtabschnitt **1.4** zu finden. Dagegen lässt sich der Sachverhalt durch folgende Daten (**Fig**. 3) klären
   * die Daten "C2" und "C4" als die während der Reise vor dem Unfall generierte Beweiskette der Benutzung und Nichtbenutzung der Sicherheitsgurte gemäß Anspruch 1,
   * die Daten "C1", die das Datum, den Start der Reise und die Reisegeschwindigkeit belegen, und
   * die Daten "C7", die die angegurteten und nichtangegurteten Insassen des Transportmittels in Zuordnung der Daten "C2" namentlich identifizieren.
- Zur Bestimmung der Lebensdauer erfasst die Vorrichtung die Zahl von Gurtbenutzungen, Gurtauszügen und/oder Blockierungen. Bei Überschreitung der Lebensdauer leuchtet die Warnlampe auf, erfolgt eine Ansage und/oder weist das Multi-Info-Display (Bildschirm) auf den notwendigen Austausch der Sicherheitsgurte, Gurtaufroller und/oder Klemmeinrichtungen hin.
- Durch die Eingabe der Namen oder Initialen aller Insassen erfasst die Vorrichtung die Sitzbelegung der Insassen im Flugzeug, Fahrzeug oder Zug. Dieses Merkmal ermöglicht, die Insassen trotz Unkenntlichkeit wegen schwerer/tödlicher Verletzung oder Verbrennung beim Unfall umgehend zu identifizieren und die Angehörigen zu benachrichtigen.
- In einer weiteren Ausgestaltung der Erfindung kommen bereits vorhandene Fahrzeug- oder Flugzeugteile zur Anwendung. Somit ist der Forschungs-, Entwicklungs- und der Herstellungsaufwand gering und die Vorrichtung äußerst zuverlässig.

Nachfolgend werden anhand der Zeichnungen mehrere Ausführungsformen der Erfindung näher erläutert. Es zeigen:
- **Fig.** 1: ein Flußdiagramm (Schaltbild) einer 1. und 2. Ausführungsform einer Vorrichtung.
- **Fig.** 2: ein Flußdiagramm einer 3. und 4. Ausführungsform einer Vorrichtung.
- **Fig.** 3: ein Flußdiagramm einer 5. und 6. Ausführungsform einer Vorrichtung mit Bildschirm, Mikrocomputer und PC.
- **Fig.** 4: eine perspektivische Ansicht des Bildschirms mit Mikrocomputer der 5. oder 6. Ausführungsform und eines Sitzes mit Sensoren und Rückhaltesystem gemäß EP-B 1 037 773, das aus Multipunkt-Sicherheitsgurt, Gurtstrammer, Gurtaufroller, Klemmeinrichtung, Gurtschlössern an der Sitzlehne und dem Sitzkissen und Schlosszungen besteht.
- **Fig.** 5: eine perspektivische Ansicht eines herkömmlichen Dreipunkt-Sicherheitsgurtes mit Gurtstrammer.

Jede Vorrichtung eignet sich für das Überwachen und Aufzeichnen der Gurtbenutzung durch die Insassen eines Transportmittels, das mit Zweipunkt-, Dreipunkt- **1e,** Multipunkt-Sicherheitsgurten **1** und/oder Hosengurten ausgerüstet ist (**Fig**. 4, 5).

Der einteilige Multipunkt-Sicherheitsgurt **1** unterscheidet sich vom Dreipunkt- Sicherheitsgurt **1e** durch die Rückhalterung des Oberkörpers des Insassen in einer X-förmigen Anordnung beider Gurtabschnitte **1.1, 1.2** und der beiden Oberschenkel mittels Steckverbindung einer Schlosszunge **11** des Beckengurtes **1.3** mit einem der Gurtschlösser **8**, **8a-8d** zum Schutz gegen Submarining. Bei dem sichersten und zugleich teuersten Rückhaltesystem kommen der Gurtstrammer **190** und die Klemmeinrichtung **14** des Gurtaufrollers **13** zum Einsatz.
Ob der unzuverlässige Airbag beim Unfall ausgelöst wird oder nicht, hat keinen Einfluss auf die Arbeitsweise jeder Vorrichtung. Da der Strom in der Stromleitung **71** für das Zünden der Gaspellets des Airbags durch die Auslöseeinrichtung (Generator) **53** sehr stark sein muss, zerstört er bei einem Unfall die Anzeigelampe **62** in der Stromleitung **75** und die Sicherung **61**, die wesentlich schwächer als die Sicherung **51** der Auslöseeinrichtung ist. Die mit schwächerem Strom versorgten Sensoren des Gurtstrammers und/oder der Klemmeinrichtung können genauso gut verwendet werden, allerdings unter der Bedingung, dass der Strom bei einem Unfall auch die zerstörerische Wirkung hat. Hierbei ist die Sicherung **51** überflüssig.
Bei einer Frontkollision arbeitet der herkömmliche Sensor des Airbags in Längsrichtung mit Abweichungswinkel von ±20° einwandfrei. Ist der Abweichungswinkel größer, dann ist mit einem Versagen zu rechnen. Wegen der Unzuverlässigkeit herkömmlicher Sensoren wird eine Vorrichtung **30e, 30f** vorgestellt. Ob der kommende 3-D-Sensor zuverlässiger als die herkömmlichen ist, muss die Praxis zuerst zeigen.

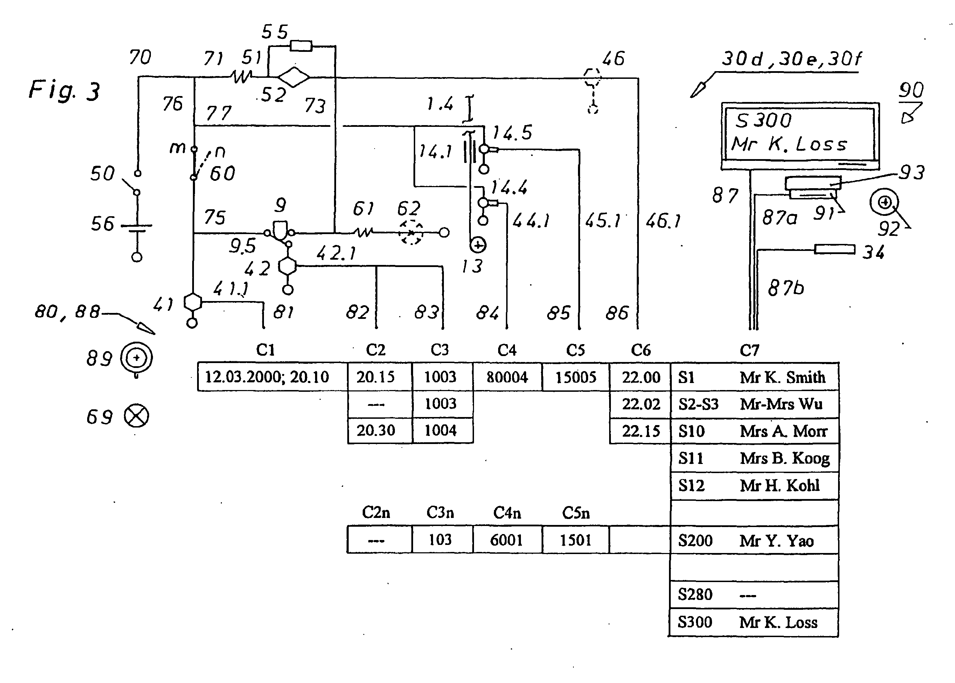

Da der 3-D-Sensor nicht in der Lage ist, die Gier-, Roll- und Nickgeschwindigkeit oder die Gier-, Roll- und Nickbeschleunigung zu erfassen, empfiehlt sich der Einsatz eines Steuergerätes **55** zwecks Aufzeichnung des Unfalls oder der Turbulenz durch Erfassung der zeitlichen Ableitung der Drehwinkel "Aₓ", "A_{y}" und A_{z}" um die x_{S}-, ys- und z_{S}-Achse des Schwerpunktes "S" des Transportmittels bei Überschreitung der Schwellwerte. Bekannt ist, dass das Steuergerät (DE-A 43 40 719) die Giergeschwindigkeit des Kraftfahrzeuges erfasst und durch asymmetrisches Bremsen regelt, um eine Korrektur der Fahrt wegen des instabilen Fahrmanövers durch den Fahrer oder Seitenwind einzuleiten.
Um mehrmalige Kollision während einer Fahrt oder mehrmalige Turbulenz eines Fluges mittels der Vorrichtung **30, 30a-30f** aufzuzeichnen, ist der Einsatz eines wieder verwendbaren Steuergerätes **55** und eines 3-D-Sensors **52 (****Fig.** 3), wie der Sensor (US 5,237,134, DE-A 41 43 032), erforderlich. Die beiden Geräte **52, 55** sind sowohl in die Betriebsoperation als auch in die Ruhestellung überführbar.

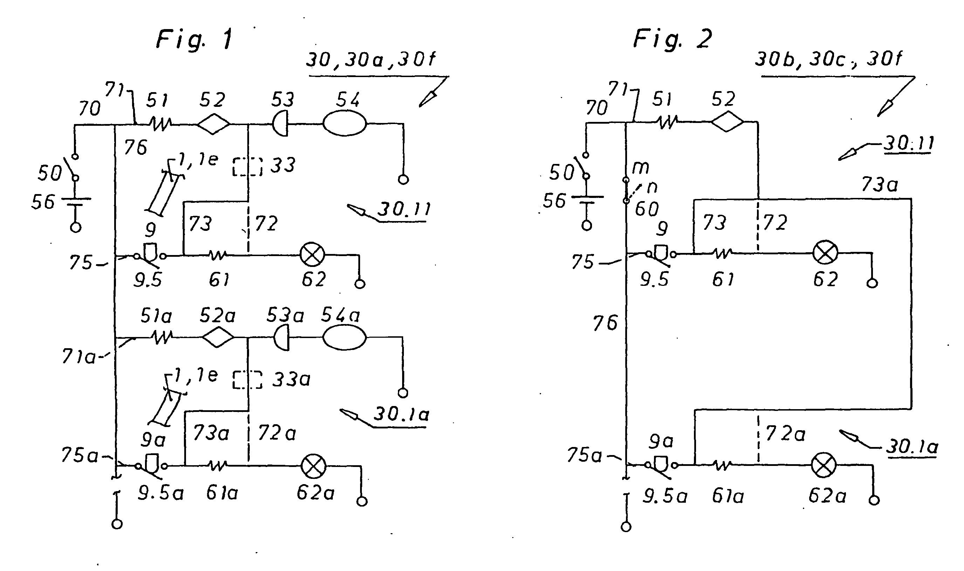

Die Vorrichtung 30, **30a-30f** besteht aus
- den Anzeigelampen (LEDs für Leuchtdioden, Glühlampen oder -birnen) **62, 62a** als Kontrollanzeigen für "Anschnallen",
- den Sicherungen **61, 61a,**
- den in den Gurtschlössern **9.1, 9.1a** befindlichen Gurtschaltern **9.5, 9.5a,**
- den Sensoren **52, 52a** und dem Steuergerät **55,** die bei einem Unfall Strom freigeben,
- den Sensoren **14.4, 14.5** der Klemmvorrichtung **14** und/oder
- einem Mikrocomputer **80,** dessen Programm die Daten "Zeitpunkt der Fahrt/des Fluges, Zeit des Unfalls/der Turbulenz, Gurtbenutzungen, Lebensdauer des Rückhaltesystems etc." erfasst, in einem großen Speicher, Datenträger **92a** (nicht gezeichnet) oder RAM **80.1** (nicht gezeichnet) speichert und aktualisiert,
- den Ausgabegeräten wie Drucker **93** und Bildschirm **88, 88a,** worauf durch die Betätigung eines Bedienungsknopfes **89** bestimmte Daten erscheinen;
- den Read- und/oder Write-Geräten wie Drucker **93,** Laufwerk (Streamer) **91** samt Datenträger **92** (Diskette, CD R-W, CD-ROM, DVD-ROM etc.) und/oder
- einem PC (Computer, Laptop, Notebook) **90** und/oder einer Blackbox **34, 34a** des Flugzeuges (Transportmittels).
Als Überwachungsschalter (-relais) für Gurtbenutzung und Signalgeber wertet der Gurtschalter **9.5, 9.5a** die Steckverbindung der Schlosszunge **9, 9a** mit Gurtschloss **9.1, 9.1a** als Signal aus, um den Strom in der Stromleitung **75, 75a** zu unterbinden und an einen Signalgeber **42** weiterzuleiten.
Jede Vorrichtung setzt sich aus einer Zahl von Kontrolleinheiten **30.11 bis 30.1a** oder **30.11 bis 30.1a** zusammen, wobei der Index "a" die für das Transportmittel zugelassene Zahl der Insassen ist (**Fig.** 1, 2).
Neuerdings gehören der Bildschirm (Multi-Info-Display) für Uhrzeit, Radio, Datum, Außentemperatur, Reisegeschwindigkeit, Verbrauch, Check-Control etc., der Mikrocomputer für Display, Motor-Management und das Steuergerät zu den Standardteilen des Kraftfahrzeuges oder Flugzeuges. Der Bildschirm eines Navigationsgerätes oder Handys ist ebenso für die Vorrichtung **30d-30f** verwendbar. Durch die Erweiterung des Programms und der beiden Speicher RAM **80.1** und ROM **80.2** (nicht gezeichnet) des vorhandenen Mikrocomputers werden die Herstellungskosten geringfügig erhöht.
Nach Einschalten (Betätigung) eines an die Hauptstromleitung **70** der Batterie **56** angeschlossenen Stromschalters (Zündschalters bei Kraftfahrzeug) **50** leuchtet die Anzeigelampe als Hinweis auf "Anschnallen" auf, die entweder durch Betätigung des Gurtschalters **9.5** im Gurtschloss **9.1** bei Steckverbindung der Schlosszunge **9** oder durch ein Zeitrelais (nicht gezeichnet) nach Überschreitung eines Anbietezyklus beim Fahren oder Fliegen ausgeschaltet wird. Die Vorrichtung ist imstande, die Gurtbenutzung bei einem Unfall zu registrieren.
Um den Betrieb sicherzustellen, müssen die Anzeigelampen wie die LEDs, die Sicherungen und der Mikrocomputer eine lange Lebensdauer aufweisen, möglichst länger als die des Transportmittels, oder sie müssen rechtzeitig ausgetauscht werden.

Bei der 1. oder 2. Ausführungsform der Vorrichtung **30, 30a** oder **30f** gemäß **Fig**. 1 oder 2 ist die Stromleitung **71, 71a** mit der Stromleitung **75, 75a** mittels einer Stromleitung **72, 72a, 73, 73a** verbunden. Bei einem Unfall geben bei Überschreitung einer Verzögerung als Schwellwert die Sensoren **52, 52a** stärke Ströme frei, welche
- die Anzeigelampen **62, 62a** der zurückgehaltenen Insassen bei der Vorrichtung **30** oder
- die Anzeigelampen **62, 62a** und Sicherungen **61, 61a** der zurückgehaltenen Insassen bei der Vorrichtung **30a** wegen Überlastung zerstören (durchbrennen). Hingegen bleiben die Anzeigelampen und/oder Sicherungen (nicht gezeichnet) der nichtangegurteten Insassen intakt.

Bei der 3. oder 4. Ausführungsform der Vorrichtung **30b, 30c** oder **30f** gemäß **Fig**. 2 wird zwecks Kostenersparnis ein einziger Sensor **52,** vorzugsweise ein 3-D-Sensor, verwendet. Bei einem Unfall gibt der Sensor **52** bei Überschreitung einer Verzögerung den stärken Strom frei, welcher
- die Anzeigelampen **62, 62a** der zurückgehaltenen Insassen bei der Vorrichtung **30b** oder
- die Anzeigelampen **62, 62a** und Sicherungen **61, 61a** der zurückgehaltenen Insassen bei der Vorrichtung **30c**
wegen Überlastung zerstört. Die Anzeigelampen und/oder Sicherungen der nichtangegurteten Insassen bleiben hingegen intakt.

Die Piloten eines AIRBUS A380 sind mit unzähligen Anzeigelampen und Bildschirmen bereits konfrontiert. Das Aufleuchten vieler Anzeigelampen **62** für 600 Passagiere durfte bei den Piloten um mehr Verwirrung stiften, insbesondere vor dem Start oder der Landung. Es ist nicht ausgeschlossen, dass Insassen, insbesondere Kinder während der Reise unbeabsichtigt die Lösetasten getätigt und/oder einige Insassen mehrmalige Aufforderung zum Anschnallen ignoriert haben. Andererseits erleichtern die Anzeigelampen
- dem Gutachter die Prüfung hinsichtlich der Gurtbenutzung, ob die Insassen während der Turbulenz, beim Unfall oder Start angegurtet waren oder nicht, und
- den Piloten oder dem Fahrer die Kontrolle über die Gurtbenutzung, ob die Insassen der Aufforderung zum Anschnallen Folge geleistet haben oder nicht.
Daraus ergibt sich folgende Lösungsansätze für die Vorrichtung **30, 30a-30f:**
- Lösbar sind die beiden Probleme durch Einbau eines Generalgurtschalters **60** in der Stromleitung **76,**
   * durch dessen Einschalten in Position "m" der Strom zu den Gurtschaltern **9.5, 9.5a** beim Einschalten des Stromschalters **50** fließt oder
   * durch dessen Ausschalten in Position "n" der Strom unterbrochen wird.
- Der Einsatz der Anzeigelampen **62, 62a** ermöglicht sowohl eine Kontrolle auf die Funktion der Vorrichtung 30, **30a-30f** als auch das Überwachen der Benutzung und Nichtbenutzung der Gurte.
- Automatisch erscheint ein Aufleuchten der Anzeigelampen **62, 62a** der nichtangegurteten Insassen auf dem Bildschirm **88, 88a** oder eine Warnung beispielsweise "Insassen auf Sitz Nr. S(itz)200, S300, S350 ....bitte anschnallen" oder "Mr. Y. Yao, Mr. K. Loss, Mrs. A. Lu....bitte anschnallen" auf dem Bildschirm **88** und auf den Bildschirmen **88a** (nicht gezeichnet) in den Kabinen des A380 oder den Zugabteilen. Ferner wird die Warnung über die Lautsprecher **78** (nicht gezeichnet) automatisch angesagt und/oder ertönt eine akustische Warnung wie Glocken, Gong usw. über die Lautsprecher **78** automatisch. Hierfür können die im Transportmittel bereits installierten Lautsprecher verwendet werden. Dieses Merkmal nimmt den Piloten, Bus-, Autofahrern, Zugführern und der Polizei die Kontrollarbeit über die Nichtbenutzer des Sicherheitsgurtes ab und trägt zur Erhöhung der Gurtbenutzungsrate bei.

Bei der 5. oder 6. Ausführungsform besteht als Steuereinheit die Vorrichtung **30d-30f** gemäß Flußdiagramm in **Fig.** 3 aus
- dem Mikrocomputer **80** mit dem RAM **80.1** zur Speicherung der Daten, einem I/O-Interface, ROM **80.2** (nicht gezeichnet) und Programm **80.3,** das die Signale in die Daten umsetzt bzw. -rechnet,
- dem Bildschirm **88, 88a,** worauf die Daten auf Anfrage durch Betätigung des Bedienungsknopfes **89** zeilen- und/oder spaltenweise erscheinen,
- dem 3-D-Sensor **52,** Steuergerät **55,** Laufwerk **91,** Drucker **93** und/oder PC **90,**
- einer Warnlampe **69,** einem akustischen und/oder sprechenden Mittel zum Hinweis auf den fälligen Austausch der Teile des Rückhaltesystems.
Über die Stromleitung **77** werden die beiden Sensoren **14.4, 14.5** mit Strom versorgt. Bei Überschreitung des Schwellwertes fließt ein Signal.
Bei Inbetriebnahme durch Einschalten des Stromschalters **50** generiert die Vorrichtung **30d-30f** während der Fahrt, während des Fluges oder beim Unfall folgende Daten:
- Die Zeile in Spalte "C1" auf dem Bildschirm zeigt das Datum und den Start einer Fahrt oder eines Fluges nach Einschalten des Stromschalters **50,** wonach der Strom durch einen Signal- oder Impulsgeber **41** in der Stromleitung **76** fließt. Ein elektrisches Signal (Impuls) **41.1** in der Signalleitung **81** wird freigegeben und vom Programm zur Festlegung des Datums und Zeitpunktes um "20.10" Uhr abgearbeitet. Um die Aufzeichnung verschiedener Daten "C1", beispielsweise, aller 600 Passagiere des A380 für eine einzige Reise zu vermeiden, werden nur die Daten "C1" des ersten Gurtbenutzers (s. Definition) oder aller nichtangegurteten Insassen aufgezeichnet. Die Zeilen in Spalte "C2" und "C3" auf dem Bildschirm zeigen den Zeitablauf beim Anschnallen um "20.15" Uhr, Nichtanschnallen durch "---" und Wiederanschnallen um "20.30" Uhr und die Zahl der Gurtbenutzungen von "1003" und "1004". Durch Einrasten der Schlosszunge **9** ins Gurtschloss **9.1** unterbricht der Gurtschalter **9.5** den Stromfluss zu der Sicherung **61** und leitet den Strom an den Signalgeber **42** weiter. Der Strom wird vom Programm zum Festsetzen der Zeit der Gurtbenutzung als Signal **42.1** in den beiden Signalleitungen **82, 83** und zum Aufzählen der Gurtbenutzungen abgearbeitet. Der Sicherheitsgurt selbst hat eine Lebensdauer als Schwellwert.
- Die Zeile in Spalte "C4" auf dem Bildschirm zeigt die Zahl der Gurtauszüge des Gurtaufrollers **13.** Beim Erfassen jedes Gurtauszuges aus dem Gurtaufroller **13** gibt der Gurtauszugsensor **14.4** ein elektrisches Signal **44.1** in der Signalleitung **84** frei. Es wird vom Programm zum Aufzählen der Gurtauszüge abgearbeitet. Sinnvoll ist das Aufzählen der Gurtauszüge ausschließlich bei Überschreitung einer Gurtlänge. Durch häufiges Ein- und Aufrollen wird die Lebensdauer des Gurtaufrollers **13** beeinträchtigt. Zur Erfassung des Gurtauszuges wird jede Gurtlänge durch Farben, Metallstreifen, Codes und/oder Muster gekennzeichnet.
- Die Zeile in Spalte "C5" auf dem Bildschirm zeigt die Zahl der Blockierungen des Gurtabschnittes **1.4** durch die beiden Klemmbacken **14.1** mittels einer nichtgezeichneten Vorrichtung unter Zuhilfenahme des Blockierungssensors **14.5** bei Überschreitung einer vorbestimmten Verzögerung. Ein vom Blockierungssensor in der Signalleitung 85 freigegebenes Signal **45.1** wird vom Programm zum Aufzählen der Blockierungen abgearbeitet.
- Die Zeile in Spalte "C6" auf dem Bildschirm zeigt eine Aufzeichnung der Zeiten mehrmaliger Kollision oder mehrmaliger Turbulenz mittels des Sensors **52** und/oder Steuergeräts **55** bei Überschreitung einer vorbestimmten Verzögerung und/oder Winkelgeschwindigkeit. Ein elektrisches Signal **46.1** in der Signalleitung **86** wird vom Programm abgearbeitet, um die Zeit der Kollision oder Turbulenz oder des Unfalles als Unfalldaten "C6" der Gurtbenutzer aufzuzeichnen. Allerdings weisen die Unfalldaten "C2" und "C6" der Nichtbenutzer des Sicherheitsgurtes Leerstellen auf. Das Programm wandelt die Unfalldaten "C2" und "C6", Daten "C3" bis "C5" und Daten "C1" des ersten Gurtbenutzers oder aller nichtangegurteten Insassen in einen Unfalldatensatz "C1" bis "C6" der Benutzer und/oder und Nichtbenutzer des Sicherheitsgurtes um. Nach der Durchführung dieser Datensicherungsoperation kehrt die Sensormasse (seismische Masse) **52.1** (nicht gezeichnet) von alleine von der Betriebsstellung in die Ruhestellung zurück. Nach jeder Durchführung stellt sich der Sensor **52** oder das Steuergerät **55** für die nächste Durchführung ein.
   Bei nochmaliger Überschreitung der vorbestimmten Verzögerung und/oder Winkelgeschwindigkeit erfolgt eine erneute Aufzeichnung der Zeit. Bei der Sicherstellung des Unfallfahrzeuges oder nach der Landung des Flugzeuges liegt die Aufzeichnung dem Gericht, der Polizei oder Fluggesellschaft als Beweismittel vor.
   Falls erforderlich, dienen die Sicherungen **61, 61a,** Anzeigelampen **62, 62a** und/oder die in der Blackbox **34** des Transportmittels gespeicherten Unfalldaten als 2. Beweismittel.
- Die Zeilen in Spalte "C7" zeigen die Namen der Passagiere, die dem Bordpersonal zugänglich sind und die bei der Identifizierung der Passagiere insbesondere bei einem Unfall oder im Falle, dass das Flugzeug gekapert wird und in Brand geraten ist, hilfreich sind. Beim Check-in und bei der Ausgabe der Bordkarten werden die Namen der Passagiere in Zuordnung der Sitze in den PC **90** im Terminal (Flughafen) eingegeben. Die Daten werden dem Mikrocomputer über die Datenleitung **87** bereitgestellt. Da nicht alle Terminals auf der Welt direkte Datenleitungen zu Flugzeugen besitzen, lassen sich die Daten zuerst auf einem Datenträger **92** des Laufwerks **91** speichern, dann mittels des Laufwerks **91** einlesen und im Mikrocomputer über die Datenleitung **87a** speichern. Das Laufwerk kann ein Bestandteil des Mikrocomputers **80** sein.
   Bei einem Unfall wandelt das Programm die Unfalldaten "C2" und "C6", Daten "C3" bis "C5" und "C7" und Daten "C1" des ersten Gurtbenutzers oder aller nichtangegurteten Insassen in einen Unfalldatensatz "C1" bis "C7" der Benutzer und/oder und Nichtbenutzer des Sicherheitsgurtes um.
- Die Unfalldaten "C2" und "C6", welche Leerstellen sind, in Zeilen in Spalten "C2n" und "C6n" auf dem Bildschirm weisen das Nichtanschnallen nach. Deswegen ist "Mr Y. Yao" auf Sitz mit Nr. "S(itz)200" schwer/tödlich verletzt.
Die Vorrichtung **30d-30f** ermöglicht dem Besitzer des Kraftfahrzeuges, Betreiber des Zuges, der Fluggesellschaft und der Polizei, die Lebensdauer der Rückhaltesysteme zu kontrollieren und Maßnahmen vor einem Unfall zu ergreifen.
Falls die Stromstärke für den Mikrocomputer zu groß ist, dann wird ein gestrichelt gezeichneter Signalgeber **46** dazwischen gestellt.
Um Manipulationen auszuschließen, müssen als Beweismaterialien eines Unfalls die durchgebrannten Anzeigelampen **62, 62a,** die Sicherungen **61, 61a** und/oder die Unfalldaten im Mikrocomputer **80** vor Zugriff eines Unbefugten geschützt werden. Hierfür ist die Blackbox **34, 34a** des Flugzeugs prädestiniert. Bekanntlich werden die Unfalldaten wie die Reise-, Aufprallgeschwindigkeit, Aufprallbeschleunigung, Gier-, Roll- und Nickgeschwindigkeit, Gier-, Roll- und Nickbeschleunigung usw. in der Blackbox gespeichert. Diese zusätzlichen Unfalldaten mit der Zeit der Kollision können als Unfalldaten "C6" aufgezeichnet werden. Bei einem beliebigen Unfall, insbesondere bei mehrmaliger Turbulenz, verarbeitet das Programm **80.3** immer das Signal **46.1,** um die Unfalldaten in Spalte "C6" aufzuzeichnen. Ausschließlich das Signal **46.1** ruft eine Datensicherung hervor, um mit Hilfe des Programms **80.3** den Satz der Unfalldaten "C1" bis "C6" oder "C1" bis "C7"
- im RAM **80.1** und/oder auf dem Datenträger **92a** (nicht gezeichnet) des Mikrocomputers automatisch zu speichern und vor Überschreiben und Löschen zu schützen und/oder
- auf dem Datenträger der Blackbox **34** über die Datenleitung **87b** und/oder auf dem Datenträger **92** über die Datenleitung **87a** automatisch zu speichern.
Bei Überschreitung mindestens eines der Grenzwerte der Gurtbenutzungen, Gurtauszüge und Blockierungen
- leuchtet die Warnlampe **69** auf, ggf. mit akustischem Ton und/oder sprechendem Hinweis auf "Austauschen der verschlissenen Teile der Rückhaltesysteme",
- erscheint der Hinweis zum "Austauschen der........." auf dem Bildschirm **88, 88a** und
- wandelt das Programm die Daten "C2" bis "C5" und Daten "C1" des ersten Gurtbenutzers oder aller nichtangegurteten Insassen in einen Datensatz "C1" bis "C5" der verschlissenen Sicherheitsgurte **1,1e** um.
Anstatt der Warnlampe **69** können auch zusätzliche Anzeigelampen **62x** (nicht gezeichnet) eingesetzt werden.
Falls dies als sicherheitsrelevant erachtet wird, muss der Mikrocomputer durch Einschränkung einer weiteren Fahrt Einfluss auf das Motor-Management nehmen. Für das Aufsuchen einer Werkstatt wird eine Fahrt beispielsweise von 100 km zugelassen.
Bei Verzicht auf den Sensor oder Versagen des Sensors beim Unfall erstellt die Vorrichtung **30e** die Daten in den Spalten "C1" bis "C5" und "C7". Wie eingangs erwähnt, lässt sich die Beweiskette der Benutzung und Nichtbenutzung der Sicherheitsgurte während einer Reise als Nachweis verwenden.

Bei einem Neustart erscheint infolge einer Betätigung des Bedienungsknopfes **89** der Datensatz "C1" bis "C5" und "C7" von der ersten bis zu der vorletzten Reise mit einer Abfrage

*"JA" oder "NEIN" zu Löschen des Datensatzes "C1" bis "C5" oder "C1" bis "C5" und "C7" der n. Reise am 20.01.2003 (dd/mm/yyyy)?*
wobei "n" = "1" bis "m", auf dem Bildschirm **88, 88a** und durch die Bestätigung der Abfrage auf "JA" gelöscht wird, wobei das Programm **(80.3)** den Datensatz "C1" bis "C5" oder "C1" bis "C5" und "C7" der angegurteten und/oder nichtangegurteten Insassen von der letzten Reise vor dem Löschen automatisch schützt. Dieses Merkmal sichert den Schutz aller relevanten Daten "C1" bis "C5" und "C7" vor einem ungewollten Löschen. Beim Löschen der Datensätze weisen die Daten "C1" bis "C5" und/oder "C7" Leerstellen auf.
Um eine Menge Datensätze "C1" bis "C5" oder "C1" bis "C5" und "C7", eine Menge Datensätze "C1" bis "C5" der verschlissenen Sicherheitsgurte **1, 1e** und eine Menge Sätze der Unfalldaten "C1" bis "C6" oder "C1" bis "C7" aus der ersten bis zu letzten oder "1 "-ten bis "n"-ten Reise, wobei "n" = "1" bis "n", sicherzustellen und im RAM **80.1** und/oder auf dem Datenträger **92a** zu speichern, muss der Mikrocomputer mit einer großen Speicherkapazität ausgerüstet sein. Wenn der Speicher voll ist, schützt das Programm **80.3** automatisch den Datensatz "C1" bis "C5" oder "C1" bis "C5" und "C7" von der letzten Reise und löscht automatisch die Datensätze "C1" bis "C5" oder "C1" bis "C5" und "C7"
- der ersten und nachfolgenden Reisen solange, bis der Speicherplatz für das Speichern der Datensätze einer neuen (kommenden) Reise und des Unfalldaten eines neuen Unfalles ausreichend ist, oder
- von der ersten bis zur vorletzten Reise.
Zweifelsohne kann ein Datenträger mit einer Speicherkapazität im Giga-byte Bereich dieses Problem lösen. Aber irgendwann wird der Speicherplatz auch voll.

Trotz aller Vorkehrungen ist eine Manipulation noch möglich, wenn der Insasse trotz Aufforderung des Piloten zum Anschnallen einen Spaziergang im Flugzeug unternimmt, nachdem er mit Absicht die Schlosszunge **9** in das Gurtschloss **9.1** eingesteckt hat. Vermeidbar ist dies durch Anordnen mindestens eines Sensors **31, 32** an dem Sitzkissen **3.1** und/oder der Sitzlehne **3.2** (**Fig.** 4, 5) zur Erfassung das Gewicht des Insassen. Durch das Gewicht schaltet das elektrische Signal des Sensors **31a, 32a** den Sperrschalter **33, 33a** (**Fig.** 1) um, um den Stromfluss während der Fahrt oder des Fluges zuzulassen.

### Referenzen

[A1] Gerichtliche Urteile gegen Ford und Daimler Chrysler zur Zahlung von Schadenersatz 173,9 und 259 Millionen Dollar an die zugehörigen Hinterbliebenen
[A2] Gespeicherte Fehlermeldungen bei ABS- und Airbagssystemen
[A3] 219 von 48458 brandneuen MB E blieben stehen. Das Blackout der Elektronik führte zum plötzlichen Motorausfall bei MB C320, AUDI A6 Avant, VW Golf IV usw.
[A4] Tod infolge des Fehlers des Sensors
[A5] Rückrufaktion infolge der Unzuverlässigkeit und Fehlauslösung des Airbags
[A6] Rückrufaktion von 204000 BMW 3 in USA und 280000 BMW 3 in BRD wegen der Fehlauslösung der Seitenairbags, wie 265 Fehlauslösungen in USA.
[A7, A7A] Trotz der Deaktivierung erschlag der Beifahrer-Frontairbag ein Baby, dessen Schale auf dem Beifahrersitz lag, wegen Fehlern der Software.
[A8] Fehlauslösung der beiden Frontairbags des Volvo S80 bei einem 5 mph Crashtest
[A9] Stehlen der Nobelfahrzeuge MB S, BMW X5, AUDI A8 usw. durch Überlisten der Wegfahrsperren. Lt. Kriminalrat Becker benötigten die Experten unter Autodieben zehn Minuten, um den Command Code der Wegfahrsperre auf Null zu setzen.
[A10] Defekte Steckverbindung war die Ursache für Nichtauslösung des Fahrer-Airbags. Dagegen wurde der Beifahrer-Airbag ausgelöst.
[A11] Rückrufaktion von 5400 Porsche Carrera und 911 Turbo, 150000 MB, 235000 Volvo, 6370 Saab usw. wegen der Unzuverlässigkeit der Airbags
[A12] Quelle: Findlaw: Source FindLaw for Legal Professional; Johnson versus Ford Motor Co, The Supreme Court of the State of Oklahoma; Case No: 95873; Decided: 04/02/2002; Mandated Issued: 04/26/2002.
   "During the accident, Johnson's seat belt webbing tore apart at the latch plate and he landed against the passenger-side door. Johnson sustained a broken pelvis, broken left arm, broken bone in his spine, ruptured bladder and a severe head injury with bruising and hemorrhaging in the brain. As a result of the brain injury, Johnson has permanent physical impairment and a reduction in his mental functioning."
   Die Jury verurteilte Ford zur Zahlung von fünf Millionen Dollar an Johnsons Eltern. Die Ursache für den Riss des Gurtes bleibt ungeklärt!

[U170301] Wegen des Aufpralls des Kopfes gegen die Frontscheibe und das Armaturenbrett beim mit einem Flat-Crash vergleichbaren Aufprall des 12,5 Jahre alten BMW 520 bei 70 km/h gegen den beifahrerseitigen Vorderabschnitt eines Fiat Tipo war die angegurtete Beifahrerin sofort tot! Ihre blonden Haare samt Blut klebten an der Windschutzscheibe und am Armaturenbrett. Wegen des Aufpralls des Kopfes gegen die A-Säule erlitt der angegurtete Fahrer schwere Kopfverletzungen! Alle Fondinsassen litten unter schweren Kopfverletzungen. Lt. des Gutachters sind sie, darunter ein 30 kg schweres Kind, nicht angegurtet, da er keine Spuren an ihren Gurten, Umlenklenkern **12** und Schlosszungen **9** feststellen konnte.
Dies ist ein eindeutiger Beweis für
- die fehlende Blockierung wegen des Abnutzens der beidseitigen Oberflächen des Gewebes beider Vorder-Gurte und/oder des Versagens ihrer verschlissenen Klemmeinrichtungen und
- die Notwendigkeit, die Benutzung und/oder Nichtbenutzung der Gurte und Lebensdauer der Sicherheitsgurte insbesondere wegen der Häufigkeit der starken und Notbremsungen bei hektischen Fahrten bspw. Taxifahrten mittels der Vorrichtung zu bestimmen.

[U211002] Ein auf einem Kindersitz sitzendes Kind wurde ordnungsgemäß angeschnallt. Dennoch wurde es aus der Rückhalterung bei einem Seitenaufprall gegen eine Eisenbahntrasse befreit und aus dem Toyota herausgeschleudert. Da die beiden Frontairbags ausgelöst wurden und keine Airbags für Fondinsassen vorgesehen waren, würde die Vorrichtung gemäß Anspruch 1 die Daten "C2" und "C4" als Beweis für die Gurtbenutzung des Kindes liefern. In den USA wäre ein Schadenersatz in Höhe von dreistelligen Millionen Dollar fällig.

[U281202] Da der AUDI A6 sich um seine Querachse überschlug, wurden die Frontairbags nicht ausgelöst. Aber der Seitenairbag des Beifahrers wurde ausgelöst. Zweifelsohne weisen die hohe Flächenpressung an der Rückenlehne und das Loch im Schultergurtabschnitt nach, dass er angeschnallt war. Beim "Frontaufprall" gegen den Zaun und die Bäume würde die Vorrichtung gemäß Anspruch 1 die Daten "C2" und "C4" als Beweis der Gurtbenutzung liefern.

[U260804₂] Keine Airbags des 19-monatigen, 140000 € teuren MB SL 55 AMG wurden beim Frontaufprall bei 50 bis 80 km/h ausgelöst. Ebenso wurden keine Airbags eines zweiten MB SL 55 AMG bei einem anderen Frontaufprall ausgelöst. Es zeigt sich, wie wichtig die Daten "C2" und "C4" als Beweis der Benutzung und/oder Nichtbenutzung der Gurte für Gerichte sind, um einwandfreie Urteile zu fällen.

## Patentansprüche

1. Vorrichtung **(30d-30f)** für ein mit Rückhaltesystemen ausgerüstetes Transportmittel umfassend
• Stromleitungen **(71, 71a, 75, 75a, 76, 77)**, die nach einem Einschalten eines an eine Hauptstromleitung **(70)** einer Batterie **(56)** angeschlossenen Hauptstromschalters **(50)** mit einem Strom versorgt sind,
• mindestens einen an die Stromleitung **(71, 71a)** angeschlossenen Sensor **(52, 52a),**
• mindestens eine Anzeigelampe **(62, 62a),** deren Aufleuchten einen Insassen zu einem Anschnallen auffordert,
• Gurtschalter **(9.5, 9.5a),** die als Überwachungsschalter der Gurtbenutzungen in Gurtschlössern **(9.1, 9.1a)** der Sicherheitsgurte **(1,1e)** angeordnet sind, entlang denen Schlosszungen **(9, 9a)** bewegbar sind,
• einen mit einem Programm **(80.3)** und mindestens einem Speichermedium **(80.1, 92a)** ausgestatteten Mikrocomputer **(80)** und
• an erste Signalleitungen **(82)** angeschlossene Signalgeber **(42),**
wobei
a1) bei den Gurtbenutzungen durch eine Steckverbindung der Schlosszungen mit den Gurtschlössern während einer Reise der Strom aus den Stromleitungen **(75, 75a)** über die Gurtschalter in die Signalgeber **(42)** fließt, deren elektrische Signale **(42.1)** in den ersten Signalleitungen **(82)** das Programm **(80.3)** aktivieren, das einen Zeitverlauf der Gurtbenutzungen als Daten "C2" der angegurteten Insassen aufzeichnet und im Speichermedium **(80.1, 92a)** speichert und
a2) bei einer Nichtbenutzung der Gurte Daten "C2" der nichtangegurteten Insassen Leerstellen aufweisen,
**dadurch gekennzeichnet, dass**
b) vor einer Installation das Speichermedium **(80.1, 92a)** mit den Leerstellen vorbelegt ist,
c) ein Beschleunigungsmesser **(52, 52a, 55)** der Sensor **(52, 52a)** oder ein an die Stromleitung **(71)** angeschlossenes Steuergerät **(55)** ist,
d) jeder Gurtaufroller **(13)** mit einem an die Stromleitung **(77)** angeschlossenen Gurtauszugsensor **(14.4)** ausgestattet ist und
e) an einem Gurtabschnitt **(1.4)** jedes Sicherheitsgurtes **(1, 1e)** eine Zahl von vorbestimmten Gurtlängen angebracht ist, wobei ein Abstand jeder Gurtlänge von einem Paar Markierungen definiert ist,
f) wobei bei einer Überschreitung von mindestens einer vorbestimmten Gurtlänge bei der Gurtbenutzung der Gurtauszugsensor **(14.4)** ein elektrisches Signal **(44.1)** in einer Signalleitung **(84)** freigibt, wobei das durch das elektrische Signal **(44.1)** aktivierte Programm **(80.3)** eine Zahl der von jedem angegurteten Insassen aus dem Gurtaufroller **(13)** durchgeführten Gurtauszüge um mindestens eins erhöht und sie als eines der Daten "C4" im Speichermedium **(80.1, 92a)** speichert.

2. Vorrichtung nach Anspruch 1, **dadurch gekennzeichnet, dass** die Markierungen mit Farben, Codes, Metallstreifen und/oder Mustern versehen sind.

3. Vorrichtung nach mindestens einem der Ansprüche 1 bis 2, **dadurch gekennzeichnet, dass** durch ein Entriegeln der Schlosszungen aus den zugehörigen Gurtschlössern während der Reise das Programm **(80.3)** aktiviert ist, um einen Zeitverlauf der Nichtbenutzung der Gurte mit den Leerstellen als die Daten "C2" der nichtangegurteten Insassen aufzuzeichnen und im Speichermedium **(80.1, 92a)** zu speichern.

4. Vorrichtung nach mindestens einem der Ansprüche 1 bis 3, **dadurch gekennzeichnet, dass** bei einer Überschreitung eines Schwellwertes des Beschleunigungsmessers **(52, 52a, 55)** bei einem Unfall das Programm **(80.3)** die Daten "C2" als Unfalldaten "C2 im Speichermedium **(80.1, 92a)** speichert.

5. Vorrichtung nach mindestens einem der Ansprüche 1 bis 4, **dadurch gekennzeichnet, dass**
a) an die Stromleitungen **(75, 75a)** angeschlossene Sicherungen **(61, 61a)** und/oder die Anzeigelampe **(62, 62a),** welche als Anzeigeelemente **(61, 61a und/oder 62, 62a)** dienen, für die Vorrichtung **(30, 30a-30f)** vorgesehen sind, wobei bei der Überschreitung des Schwellwertes bei dem Unfall der Beschleunigungsmesser **(52, 52a, 55)** den Strom freigibt,
b) der von den Stromleitungen **(71, 71a)** über Stromleitungen **(72, 72a; 73, 73a)** in die Stromleitungen **(75, 75a)** der angegurteten Insassen fließt und ihre Anzeigeelemente **(61, 61a und/oder 62, 62a)** durchbrennt.

6. Verfahren zu einem Schutz der Beweise und Unfalldaten vor Manipulationen nach Anspruch 5, **dadurch gekennzeichnet, dass** die Anzeigeelemente **(61, 61a und/oder 62, 62a)** versiegelt und/oder in einer Anzeigeelementen-Blackbox **(34a)** des Transportmittels gesichert werden.

7. Vorrichtung nach mindestens einem der Ansprüche 1 bis 5, **dadurch gekennzeichnet, dass** eine Überprüfung einer Funktion der Vorrichtung **(30, 30a-30f)** durch das Aufleuchten der Anzeigelampen **(62, 62a)** bei der Nichtbenutzung der Sicherheitsgurte erfolgt.

8. Vorrichtung nach mindestens einem der Ansprüche 1 bis 5, 7, **dadurch gekennzeichnet, dass** ein Generalgurtschalter **(60)** einen ersten Abschnitt der Stromleitung **(76)** mit einem zweiten Abschnitt verbindet, wobei der Strom
- zu allen Gurtschaltern **(9.5, 9.5a)** durch ein Einschalten des Generalgurtschalters **(60)** fließt oder
- durch ein Ausschalten nicht fließt.

9. Vorrichtung nach mindestens einem der Ansprüche 1 bis 5, 7 und 8, **dadurch gekennzeichnet, dass** der Strom in der Stromleitung (**76**) einen Signalgeber **(41),** der ein elektrisches Signal **(41.1)** in einer Signalleitung **(81)** freigibt, aktiviert, wobei das durch das Signal **(41.1)** aktivierte Programm **(80.3)** ein Datum und einen Zeitpunkt der Reise eines unter den angegurteten Insassen als ersten Gurtbenutzers oder aller nichtangegurteten Insassen als Datum "C1" im Speichermedium **(80.1, 92a)** speichert.

10. Vorrichtung nach Anspruch 9, **dadurch gekennzeichnet, dass** die elektrischen Signale **(42.1)** in zweiten Signalleitungen **(83),** an die die Signalgeber **(42)** angeschlossen sind, das Programm **(80.3)** aktivieren, das eine Zahl der Gurtbenutzungen der angegurteten Insassen um eins erhöht und sie als Datum "C3" im Speichermedium **(80.1, 92a)** speichert.

11. Vorrichtung nach Anspruch 10, **dadurch gekennzeichnet, dass** bei einer Überschreitung einer vorbestimmten Verzögerung als Schwellwert ein an jeder Klemmvorrichtung **(14)** angebrachter Blockierungssensor **(14.5)** ein elektrisches Signal **(45.1)** in einer Signalleitung **(85)** freigibt, wobei das durch das Signal **(45.1)** aktivierte Programm **(80.3)** eine Zahl der durch ein Paar Klemmbacken **(14.1)** der Klemmeinrichtung **(14)** durchgeführten Blockierungen am Gurtabschnitt **(1.4)** um eins erhöht und sie als Datum "C5" im Speichermedium **(80.1, 92a)** speichert.

12. Vorrichtung nach Anspruch 11, **dadurch gekennzeichnet, dass**
a) die Vorrichtung **(30d-30f)** mit mindestens einem Bildschirm **(88, 88a)** versehen ist und
b) bei der Überschreitung mindestens eines der Grenzwerte der Gurtbenutzungen, Gurtauszüge und Blockierungen eine Warnung zu einem Austausch der verschlissenen Teile der zugehörigen Sicherheitsgurte **(1,1e)**
- auf dem Bildschirm **(88, 88a)** erscheint und/oder
- über ein Aufleuchten mindestens einer Warnlampe **(69, 62x),** einen akustischen Ton und/oder eine Ansage erfolgt.

13. Vorrichtung nach Anspruch 11 oder 12, **dadurch gekennzeichnet, dass** bei der Überschreitung mindestens eines der Grenzwerte der Gurtbenutzungen, Gurtauszüge und Blockierungen das Programm **(80.3)** einen Datensatz "C1" bis "C5" der verschlissenen Sicherheitsgurte **(1, 1e)** aus den Daten "C2" bis "C5" zusammen mit dem Datum "C1" des ersten Gurtbenutzers oder aller nichtangegurteten Insassen bildet und im Speichermedium **(80.1, 92a)** speichert.

14. Vorrichtung nach mindestens einem der Ansprüche 1 bis 5, 7 bis 11, **dadurch gekennzeichnet, dass** Namen der Insassen in Zuordnung der Sitze **(3)** in einen PC **(90)** eingegeben sind und als Daten "C7"
- im Speichermedium **(80.1, 92a)** über eine Terminal-Datenleitung **(87)** gespeichert sind oder
- auf einem Datenträger **(92)** eines Laufwerkes **(91)** als Zusatz-Speichermedium zwischengespeichert sind, dessen Daten "C7" bei einem Bedarf über das Laufwerk **(91)** eingelesen und im Speichermedium **(80.1, 92a)** über eine PC-Datenleitung **(87a)** gespeichert sind.

15. Vorrichtung nach mindestens einem der Ansprüche 1 bis 5, 7 bis 14, **dadurch gekennzeichnet, dass** bei einer Beendigung der Reise das Programm **(80.3)**
- einen Datensatz "C1" bis "C5" der angegurteten und/oder nichtangegurteten Insassen aus den Daten "C2" bis "C5" zusammen mit dem Datum "C1" oder
- einen Datensatz "C1" bis "C5" und "C7" der angegurteten und/oder nichtangegurteten Insassen aus den Daten "C2" bis "C5" und "C7" zusammen mit dem Datum "C1"
bildet und im Speichermedium **(80.1, 92a)** speichert.

16. Vorrichtung nach mindestens einem der Ansprüche 1 bis 5, 7 bis 15, **dadurch gekennzeichnet, dass** eine Warnung ausschließlich zu den nichtangegurteten Insassen auf dem Bildschirm **(88, 88a)** automatisch erscheint und/oder über Lautsprecher (**78**) automatisch ausgesprochen ist.

17. Vorrichtung nach mindestens einem der Ansprüche 1 bis 5, 7 bis 16, **dadurch gekennzeichnet, dass** bei der Überschreitung mindestens eines der Schwellwerte, denen drei translatorische und drei rotatorische Beschleunigungen des Transportmittels unterliegen, der Beschleunigungsmesser **(52, 52a, 55)** ein elektrisches Signal **(46.1)** in der Signalleitung **(86)** freigibt, wobei das durch das Signal **(46.1)** aktivierte Programm **(80.3)** eine Datensicherungsoperation durchführt,
- eine Außentemperatur, Zeit des Unfalles und einen Verlauf einer Aufprallgeschwindigkeit, Aufprallbeschleunigung, Gier-, Roll- und Nickgeschwindigkeit, Gier-, Roll- und Nickbeschleunigung über eine Unfalldauer als Unfalldaten "C6" aufzuzeichnen und
- einen Unfalldatensatz "C1" bis "C6" der angegurteten und/oder nichtangegurteten Insassen aus den Unfalldaten "C2" und "C6", den Daten "C3" bis "C5" und dem Datum "C1" oder einen Unfalldatensatz "C1" bis "C7" der angegurteten und/oder nichtangegurteten Insassen aus den Unfalldaten "C2" und "C6", den Daten "C3" bis "C5" und "C7" und dem Datum "C1" zu bilden und im Speichermedium **(80.1, 92a)** zu speichern,
wobei die Unfalldaten "C6" der nichtangegurteten Insassen die Leerstellen aufweisen.

18. Vorrichtung nach Anspruch 17, **dadurch gekennzeichnet, dass** eine Multi-Kollision oder eine Multi-Turbulenz durch
- einen wieder verwendbaren "3-D"-Sensor **(52)**, dessen Sensormasse **(52.1)** nach einer Durchführung der Datensicherungsoperation von einer Betriebsstellung in eine Ruhestellung von alleine zurückkehrt und auf eine neue Durchführung einstellt, oder
- ein wieder verwendbares Steuergerät **(55),** das nach einer Durchführung der Datensicherungsoperation auf eine neue Durchführung einstellt,
erfasst ist.

19. Vorrichtung nach mindestens einem der Ansprüche 13 bis 18, **dadurch gekennzeichnet, dass**
- der Datensatz "C1" bis "C5" der verschlissenen Sicherheitsgurte **(1,1e),**
- der Datensatz "C1" bis "C5" oder "C1" bis "C5" und "C7" der angegurteten und/oder nichtangegurteten Insassen und/oder
- der Unfalldatensatz "C1" bis "C6" oder "C1" bis "C7" der angegurteten und/oder nichtangegurteten Insassen
durch eine Betätigung eines Bedienungsknopfes **(89)** auf dem Bildschirm **(88, 88a)** erscheinen.

20. Vorrichtung nach mindestens einem der Ansprüche 13 bis 19, **dadurch gekennzeichnet, dass**
- eine Menge Datensätze "C1" bis "C5" der verschlissenen Sicherheitsgurte **(1, 1e),**
- eine Menge Datensätze "C1" bis "C5" oder "C1" bis "C5" und "C7" der angegurteten und/oder nichtangegurteten Insassen und/oder
- eine Menge Unfalldatensätze "C1" bis "C6" oder "C1" bis "C7" der angegurteten und/oder nichtangegurteten Insassen
aus einer ersten bis letzten Reise in dem Speicherplatz des Speichermediums **(80.1, 92a)** gespeichert sind, wobei in einem Fall, dass der Speicherplatz voll ist, dieser durch das Programm **(80.3)** freigemacht ist, das
- den Datensatz "C1" bis "C5" oder "C1" bis "C5" und "C7" der angegurteten und/oder nichtangegurteten Insassen der letzten Reise vor einem Löschen automatisch schützt und
- ausschließlich die Datensätze "C1" bis "C5" oder "C1" bis "C5" und "C7" der angegurteten und/oder nichtangegurteten Insassen
> der ersten und nachfolgenden Reisen automatisch löscht, bis ein Speicherplatz für ein Speichern der Datensätze einer neuen Reise und mindestens eines neuen Unfalls ausreichend ist, oder
> von der ersten bis zu einer vorletzten Reise automatisch löscht,
wobei die Daten "C1" bis "C5" oder "C1" bis "C5" und "C7" mit den Leerstellen vorbelegt sind.

21. Vorrichtung nach mindestens einem der Ansprüche 13 bis 19, **dadurch gekennzeichnet, dass** nach einem Neustart der Datensatz "C1" bis "C5" oder "C1"bis "C5" und "C7" der angegurteten und/oder nichtangegurteten Insassen von einer ersten bis zu einer vorletzten Reise mit einer Abfrage
*"JA" oder "NEIN" zu Löschen des Datensatzes "C1" bis "C5" oder "C1" bis "C5" und "C7" der "n"-ten Reise am 20.01.2003 (dd/mm/yyyy)?*,
wobei "n" = "1" bis "m", auf dem Bildschirm **(88, 88a)** infolge einer Betätigung des Bedienungsknopfes **(89)** erscheint und durch eine Bestätigung der Abfrage auf "JA" gelöscht ist und die Daten "C1" bis "C5" oder "C1" bis "C5" und "C7" mit den Leerstellen vorbelegt sind, wobei das Programm **(80.3)** den Datensatz "C1" bis "C5" oder "C1" bis "C5" und "C7" der angegurteten und/oder nichtangegurteten Insassen von einer letzten Reise vor dem Löschen automatisch schützt.

22. Verfahren zu einem Schutz der Beweise und Unfalldaten vor Manipulationen nach mindestens einem der Ansprüche 1 bis 5, 7 bis 21, **dadurch gekennzeichnet, dass**
- der Datensatz "C1" bis "C5" der verschlissenen Sicherheitsgurte **(1, 1e),**
- der Datensatz "C1" bis "C5" oder "C1" bis "C5" und "C7" der angegurteten und/oder nichtangegurteten Insassen von der letzten Reise und/oder
- der Unfalldatensatz oder Unfalldatensätze "C1 bis "C6" oder "C1" bis "C7" der angegurteten und/oder nichtangegurteten Insassen
im Speichermedium **(80.1, 92, 92a)** und/oder in einer Unfalldaten-Blackbox **(34)** des Transportmittels gespeichert werden.

23. Vorrichtung nach mindestens einem der Ansprüche 1 bis 5, 7 bis 22, **dadurch gekennzeichnet, dass** an einem Sitzkissen **(3.1)** und/oder einer Sitzlehne **(3.2)** mindestens ein Sensor **(31, 32)** angebracht ist, der ein Gewicht des sitzenden Insassen erfasst, wodurch ein elektrisches Signal eine Sperrung eines Sperrschalters **(33, 33a)** für einen Stromfluss des Sensors **(52, 52a)** von der Stromleitung **(71, 71a)** über die Stromleitungen **(72, 72a; 73, 73a)** in die Stromleitungen **(75, 75a)** aufhebt.

## Claims

1. Device **(30d to 30f)** for a transport system, equipped with restraint systems, comprising
• current lines **(71, 71a, 75, 75a, 76, 77),** supplied with a current when switching on a current-control switch **(50),** wired to a main electric line **(70),** wired to a battery **(56),**
• at least one sensor **(52, 52a),** wired to the current line **(71, 71a),**
• at least one warning light **(62, 62a),** which flashes to request a passenger to buckle up,
• belt switches **(9.5, 9.5a),** which, serving to monitor seat-belt usages, are located in buckle assemblies **(9.1, 9.1a)** of seat belts **(1,1e),** along which latch plates **(9, 9a)** are moveable,
• a microprocessor **(80),** equipped with a program **(80.3)** and at least one storage medium **(80.1, 92a)** and
• signal transmitters **(42),** wired to first signal lines **(82),**
where
a1) upon the seat-belt usages by plug-in connecting the latch plates to the buckle assemblies during a journey the current flows from the current lines **(75, 75a)** through the belt switches to the signal transmitters **(42),** electrical signals **(42.1)** of which in the first signal lines **(82)** trigger the program **(80.3)** to record a time period of the seat-belt usages as data "C2" of belted passengers and store them in the storage medium **(80.1, 92a)** and
a2) upon a non-use of the seat belts data "C2" of belted passengers are blank,
**characterized** that
b) the storage medium **(80.1, 92a)** is initialized before installation,
c) an accelerometer **(52, 52a, 55)** is the sensor **(52, 52a)** or a control device **(55),** wired to the current line **(71),**
d) each belt retractor **(13)** is equipped with a belt-protraction sensor **(14.4),** wired to the current line **(77), and**
e) a belt portion **(1.4)** of each seat belt **(1, 1e)** is arranged with a number of predetermined belt-lengths, each having a distance defined by a pair of belt-protraction markers,
f) where in excess of the predetermined belt-length upon the seat-belt usage the belt-protraction sensor **(14.4)** emits in a signal line **(84)** an electrical signal **(44.1),** triggering the program **(80.3)** to increase a number of belt protractions, carried out by the belted passenger, out of the belt retractor **(13)** by at least one and store it as one of data "C4" in the storage medium **(80.1, 92a).**

2. Device according to claim 1, **characterized** that the belt-protraction markers are provided by colours, codes, metal strips and/or patterns.

3. Device according to claim 1 or 2, **characterized** that the program **(80.3),** activated when the belted passengers release their latch plates from the respective buckle assemblies during the journey, sets a time period of the non-use of the seat belts with the blank as the data "C2" of the unbelted passengers und store them in the storage medium **(80.1, 92a).**

4. Device according to at least one of claims 1 to 3, **characterized** that in excess of an accelerometer threshold value in the accident the program **(80.3)** stores the data "C2" as accident data "C2" in the storage medium **(80.1, 92a).**

5. Device according to at least one of claims 1 to 4, **characterized** that
a) fuses **(61, 61a)** and/or the warning light **(62, 62a)** serve as indicators **(61, 61a and/or 62, 62a),** provided for the device **(30, 30a to 30f),** where in excess of the threshold values in the accident the accelerometer **(52, 52a, 55)** emits the current,
b) which flows from the current line **(71, 71a)** through current lines **(72, 72a; 73, 73a)** to the current lines **(75, 75a)** of the belted passengers and melts their indicators **(61, 61a and/or 62, 62a).**

6. Method for protecting proofs and accident data from manipulation in the device according to claim 5, **characterized** that the indicators **(61, 61a and/or 62, 62a)** are sealed and/or secured in an indicator black box **(34a)** of the transport system.

7. Device according to at least one of claims 1 to 5, **characterized** that the warning lights **(62, 62a),** serving to monitor a functioning of the device **(30, 30a to 30f),** flash when the seat belts are not used.

8. Device according at least one of claims 1 to 5, 7, **characterized** that a master belt switch **(60)** connects a first portion of the current line **(76)** to a second portion thereof, where the current
- flows to all belt switches **(9.5, 9.5a)** when switching the master belt switch **(60)** on or
- does not flow when switching it off.

9. Device according at least one of claims 1 to 5, 7 and 8, **characterized** that the current in the current line **(76)** activates a signal transmitter **(41)** to emit in a signal line **(81)** an electrical signal **(41.1),** triggering the program **(80.3),** which sets a date and an onset of the journey, records them as a datum "C1" of a first belt user among the belt users or of all unbelted passengers and stores it in the first storage medium **(80.1, 92a).**

10. Device according to claim 9, **characterized** that the electrical signals **(42.1)** in second signal lines **(83),** wired to the signal transmitters **(42),** trigger the program **(80.3)** to increase a number of the seat-belt usages of the belted passengers by one and store it as datum "C3" in the storage medium **(80.1, 92a).**

11. Device according to claim 10, **characterized** that in excess of a predetermined deceleration, serving as threshold value, a belt-blocking sensor **(14.5)** of each locking mechanism **(14)** emits in a signal line **(85)** an electrical signal **(45.1),** triggering the program **(80.3)** to increase a number of blockings, achieved by a pair of clamping shoes of the locking mechanism **(14)** on the belt portion **(1.4),** by one and store it as datum "C5" in the storage medium **(80.1, 92a).**

12. Device according to claim 11, **characterized** that
a) the device **(30d to 30f)** is provided with at least one screen **(88, 88a)** and
b) in excess of at least one of the threshold values of the seat-belt usages, belt protractions and blockings a warning to replace the worn parts of the respective seat belts **(1, 1e)**
- appears on the screen **(88, 88a)** and/or
- ensues from flashing of at least one warning light **(69, 62x),** a sound and/or a spoken message.

13. Device according to claim 11 or 12, **characterized** that in excess of at least one of the threshold values of the seat-belt usages, belt protractions and blockings the program **(80.3)** defines the data "C2" to "C5" along with the datum "C1" of the first belt user or all unbelted passengers as a data set "C1" to "C5" of the worn seat belts **(1,1e)** and stores it in the storage medium **(80.1, 92a).**

14. Device according at least one of claims 1 to 5, 7 to 11, **characterized** that names of passengers in reference to seats **(3),** typed in a PC **(90),** serve as data "C7", which are stored
- in the storage medium **(80.1, 92a)** via a terminal-data line **(87)** of a terminal or
- temporarily in a storage medium **(92)** of a disk drive **(91),** from which the data "C7" are read upon need via the disk drive **(91)** and stored finally in the first storage medium **(80.1, 92a)** via a PC-data line **(87a)** of the PC.

15. Device according at least one of claims 1 to 5, 7 to 14, **characterized** that when the journey comes to an end the program **(80.3)** defines
- the data "C2" to "C5" along with the datum "C1" as a data set "C1" to "C5" of the belted and/or unbelted passengers or
- the data "C2" to "C5" and "C7" along with the datum "C1" as a data set "C1" to "C5" and "C7" of the belted and/or unbelted passengers
and stores it in the storage medium **(80.1, 92a).**

16. Device according at least one of claims 1 to 5, 7 to 15, **characterized in that** a warning only to the unbelted passengers automatically appears on at least one screen **(88, 88a)** and/or is automatically announced via loud speakers **(78).**

17. Device according at least one of claims 1 to 5, 7 to 16, **characterized** that in excess of at least one of the threshold values, to which three translatory and three rotatory accelerations of the transport system are subjected, the accelerometer **(52, 52a, 55)** emits in the signal line **(86)** an electrical signal **(46.1),** triggering the program **(80.3)** to accomplish a data-saving operation such as:
- to record an exterior temperature, an onset of the accident and a curve of an impact speed, impact acceleration, a yaw-, pitch- and roll-speed, yaw-, roll- and pitch-acceleration over a duration of the accident as accident data "C6" and
- to store the accident data "C2" and "C6", the data "C3" to "C5" along with the datum "C1" as an accident-data set "C1" to "C6" of the belted and/or unbelted passengers or the accident data "C2" and "C6", the data "C3" to "C5" and "C7" along with the datum "C1" as an accident-data set "C1" to "C7" of the belted and/or unbelted passengers in the storage medium **(80.1, 92a);**
where the accident data "C6" of the unbelted passenger are blank.

18. Device according to claim 17, **characterized** that multi-crashes or multi-turbulence-related vibrations are detected by
- a reusable "3-D"-sensor **(52),** having a sensing mass **(52.1),** which automatically returns from an operative position to a resting position and is ready for registering a next accident, after the data-saving operation is accomplished; or
- a reusable control device **(55),** which is ready for registering a next accident, after the data-saving operation is accomplished.

19. Device according at least one of claims 13 to 18, **characterized** that
- the data set "C1" to "C5" of the worn seat belts **(1, 1e);**
- the data set "C1" to "C5" or "C1" to "C5" and "C7" of the belted and/or unbelted passengers and/or
- the accident-data set "C1" to "C6" or "C1" to "C7" of the belted and/or unbelted passengers appear on the screen **(88, 88a)** upon activating an operating knob **(89).**

20. Device according at least one of claims 13 to 19, **characterized** that
- a great amount of data sets "C1" to "C5" of the worn seat belts **(1, 1e),**
- a great amount of data sets "C1" to "C5" or "C1" to "C5" and "C7" of the belted and/or unbelted passengers and/or
- a great amount of accident-data sets "C1" to "C6" or "C1" to "C7" of the belted and/or unbelted passengers
from the first to the last journey are stored in the storage medium **(80.1, 92a),** a storage space of which, when full, is cleared by the program **(80.3),** which
- automatically protects the data set "C1" to "C5" or "C1" to "C5" and "C7" of the belted and/or unbelted passengers of the last journey and
- automatically erases only the data sets "C1" to "C5" or "C1" to "C5" and "C7" of the belted and/or unbelted passengers
> from the first journey and the successive journeys until the storage space is large enough to store data sets of an oncoming journey and at least one new accident; or
> from the first to the penultimate journey where the data "C1" to "C5" or "C1" to "C5" and "C7" are set with blank.

21. Device according at least one of claims 13 to 19, **characterized** that upon activating the operating knob **(89)** after restarting the data set "C1" to "C5" or "C1" to "C5" and "C7" of the belted and/or unbelted passengers from the first up to the penultimate journey with an inquiry "YES" or "NO" "to delete that data set on 01/20/2003?"
* "YES" or "NO" to delete the data set "C1" to "C5" or "C1" to "C5" and "C7" of the journey number "n" on 01/20/2003 (mm/dd/yyyy)? *,
where "n" = "1" to "m", appears on the screen **(88, 88a)** and is deleted when confirming the inquiry with "YES" and the deleted data "C1" to "C5" or "C1" to "C5" and "C7" are set with blank while the program **(80.3)** automatically protects the data set "C1" to "C5" or "C1" to "C5" and "C7" of the belted and/or unbelted passengers of the last journey from being erased.

22. Method for protecting proofs and accident data from manipulation in the device according at least one of claims 1 to 5, 7 to 21, **characterized** that
- the data set "C1" to "C5" of the worn seat belts **(1, 1e);**
- the data set "C1" to "C5" or "C1" to "C5" and "C7" of the belted and/or unbelted passengers of the last journey and/or
- the accident-data set "C1" to "C6" or "C1" to "C7" of the belted and/or unbelted passengers
are stored in the storage medium **(80.1, 92, 92a)** and/or in an accident-data black box **(34)** of the transport system.

23. Device according at least one of claims 1 to 5, 7 to 22, **characterized** that to a seat cushion **(3.1)** and/or a seat backrest **(3.2)** at least one sensor **(31, 32)** is arranged, which, when sensing a weight of the passenger seating on that seat, emits an electrical signal to a lock switch **(33, 33a),** allowing the current of the sensor **(52, 52a)** to flow from the current line **(71, 71a)** to the current line **(75, 75a)** via the current line **(72, 72a; 73, 73a).**

## Revendications

1. Dispositif **(30d-30f)** destiné à un moyen de transport équipé de systèmes de retenue qui comprennent :
• des câbles électriques **(71, 71a, 75, 75a, 76, 77)** alimentés en courant après la commutation de l'interrupteur principal **(50)** raccordé au câble électrique principal **(70)** raccordé à une batterie **(56) ;**
• au moins un capteur **(52, 52a)** raccordé au câble électrique **(71, 71a) ;**
• au moins une lampe témoin **(62, 62a)** signalant à un passager de boucler la ceinture lorsqu'elle s'allume ;
• des contacteurs **(9.5, 9.5a)** indicateurs du port de la ceinture logés à l'intérieur des boucles **(9.1, 9.1a)** des ceintures de sécurité **(1, 1e)** le long desquelles des languettes de boucle **(9, 9a)** sont disposées mobiles ;
• un micro-ordinateur **(80)** équipé d'un programme **(80.3)** et d'au moins un support de mémoire **(80.1, 92a),** ainsi que :
• des générateurs de signaux **(42)** raccordés à de premiers câbles de signalisation **(82) ;**
dans lequel :
a1) les ceintures étant bouclées lors d'un voyage et les languettes desdites ceintures étant engagées dans les boucles desdites ceintures, le courant circule des câbles électriques **(75, 75a)** en passant par les contacteurs de la ceinture et il est injecté dans les générateurs de signaux **(42)** dont les signaux électriques **(42.1)** activent le programme **(80.3)** dans de premiers câbles de signalisation **(82),** ledit programme enregistrant la durée de l'utilisation des ceintures par les différents passagers ayant bouclé leurs ceintures sous forme de données "C2" sauvegardées dans le support de mémoire **(80.1, 92a),** et :
a2) en cas de non-port des ceintures, lesdites données "C2" des passagers n'ayant pas bouclé leurs ceintures sont vides ;
**caractérisé en que** :
b) le support de mémoire **(80.1, 92a)** est vide avant l'installation ;
c) le capteur **(52, 52a)** ou un bloc de commande **(55)** raccordé au câble électrique **(71)** est un accéléromètre **(52, 52a, 55) ;**
d) chaque enrouleur de ceinture **(13)** est équipé d'un capteur de déroulement de sangle **(14.4)** raccordé au câble électrique **(77)** et :
e) sur une portion de ceinture **(1.4)** de chaque ceinture de sécurité **(1, 1e)** se trouve un nombre de sections d'une longueur prédéterminée, la longueur desdites sections étant marquée par une paire de repères ;
f) lorsqu'au moins l'une des longueurs prédéterminées desdites sections est dépassée, le capteur de déroulement de sangle **(14.4)** libère un signal électrique **(44.1)** dans une ligne de signalisation **(84)** lorsque la ceinture est utilisée, ledit programme **(80.3)** activé par le signal électrique **(44.1)** augmentant le nombre de déroulements de la ceinture effectués par chacun des passagers ceinturés à l'aide de l'enrouleur de ceinture **(13)** d'au moins 1 et les mémorisant comme faisant partie des données "C4" dans le support de mémoire **(80.1, 92a).**

2. Dispositif selon la revendication 1, **caractérisé en ce que** lesdits repères sont munis de couleurs, codes, barres métalliques et/ou motifs.

3. Dispositif selon au moins l'une des revendications 1 à 2, **caractérisé en ce que** le programme **(80.3)** est activé pendant le voyage lorsque les languettes de boucle sont déverrouillées de leur boucle respective, ledit programme enregistrant la durée du non-port de la ceinture sous forme de blancs correspondants aux données "C2" des passagers n'ayant pas attachés leurs ceintures qui sont stockées dans le support de mémoire **(80.1, 92a).**

4. Dispositif selon au moins l'une des revendications 1 à 3, **caractérisé en ce que** le programme **(80.3)** sauvegarde les données "C2" dans le support de mémoire **(80.1, 92a)** lors du dépassement d'une valeur seuil de l'accéléromètre **(52, 52a, 55)** en cas d'accident sous forme de données "C2" relatif audit accident.

5. Dispositif selon au moins l'une des revendications 1 à 4, **caractérisé en ce que**
a) sont prévus pour ledit dispositif **(30, 30a-30f)** des fusibles **(61, 61a)** et/ou la lampe témoin **(62, 62a)** raccordés aux câbles électriques **(75, 75a)** et servant d'éléments d'affichage **(61, 61a et/ou 62, 62a),** l'accéléromètre **(52, 52a, 55)** libérant le courant lors du dépassement de la valeur seuil en cas d'accident ;
b) ledit courant circulant par les câbles électriques **(71, 71a)** en passant par les câbles électriques **(72, 72a; 73, 73a)** jusqu'aux câbles électriques **(75, 75a)** des passagers ayant attaché leurs ceintures de sécurité grillant leurs indicateurs **(61, 61a et/ou 62, 62a).**

6. Procédé destiné à protéger les preuves et les données d'un accident contre les manipulations selon la revendication 5, **caractérisé en ce que** les indicateurs **(61, 61a et/ou 62, 62a)** sont scellés et/ou sécurisés dans une boîte noire **(34a)** destinée aux indicateurs du moyen de transport.

7. Dispositif selon au moins l'une des revendications 1 à 5, **caractérisé en ce que** la vérification d'une fonctionnalité du dispositif **(30, 30a-30f)** se fait au moyen de lampes témoins **(62, 62a)** s'allumant en cas de non-port des ceintures de sécurité.

8. Dispositif selon au moins l'une des revendications 1 à 5, 7, **caractérisé en ce qu'**un interrupteur général de ceinture **(60)** relie une première section du câble électrique **(76)** à une deuxième section, le courant
- circulant vers tous les contacteurs de ceinture **(9.5, 9.5a)** après avoir commuté l'interrupteur général de ceinture **(60),** ou
- ne circulant pas lorsque ledit interrupteur général est éteint.

9. Dispositif selon au moins l'une des revendications 1 à 5, 7 et 8, **caractérisé en ce que** le courant circulant dans le câble électrique **(76)** active un générateur de signaux **(41)** qui libère un signal électrique **(41.1)** dans une ligne de signalisation **(81),** lorsque le passager ceinturé est un premier utilisateur de la ceinture, le programme **(80.3)** ayant été activé par ledit signal **(41.1)** sauvegardant une date et une heure de voyage attribuées à un premier utilisateur parmi les passagers ceinturés ou à tous les utilisateurs non ceinturés sous forme de données "C1" dans le support de mémoire **(80.1, 92a).**

10. Dispositif selon la revendication 9, **caractérisé en ce que** les signaux électriques **(42.1)** passant par de deuxièmes lignes de signalisation **(83)** auxquelles sont raccordés les générateurs de signaux **(42),** activent le programme **(80.3)** qui augmente un nombre d'utilisations de la ceinture de 1 et le sauvegarde en tant que date "C3" dans le support de mémoire **(80.1, 92a).**

11. Dispositif selon la revendication 10, **caractérisé en ce qu'**en cas du dépassement d'un retardement prédéterminé comme valeur seuil, un capteur de blocage **(14.5)** monté sur chacun des dispositifs de serrage **(14)** libère un signal électrique **(45.1)** dans une ligne de signalisation **(85),** le programme **(80.3)** activé par le signal **(45.1)** augmentant un nombre de blocages effectués par une paire de mâchoires **(14.1)** du dispositif de serrage **(14)** sur la section de ceinture **(1.4)** de 1 en les sauvegardant sous forme de date "C5" dans le support de mémoire **(80.1, 92a).**

12. Dispositif selon la revendication 11, **caractérisé en ce que** :
a) le dispositif **(30d-30f)** est équipé d'au moins un écran **(88, 88a),** et :
b) lors du dépassement d'au moins l'une des valeurs limites des utilisations de ceinture, des déroulements de ceinture et des blocages, une mise en garde pour changer les composants usés des ceintures de sécurité correspondantes **(1, 1e) :**
- est affichée sur l'écran **(88, 88a)** et/ou :
- est signalée par l'allumage d'au moins une lampe témoin **(69, 62x),** par un signal acoustique et/ou un message sonore.

13. Dispositif selon la revendication 11 ou 12, **caractérisé en ce qu'**en cas de dépassement d'au moins l'une des valeurs limites de l'utilisation de la ceinture, de son déroulement et de son blocage, le programme **(80.3)** génère un enregistrement "C1" à "C5" des ceintures usées **(1, 1e)** à partir des données "C2" à "C5" en les associant à la date "C1" du premier utilisateur de la ceinture ou de tous les passagers non ceinturés et les sauvegarde dans le support de mémoire **(80.1, 92a).**

14. Dispositif selon au moins l'une des revendications 1 à 5, 7 à 11, **caractérisé en ce que** les noms des passagers ont été saisis dans un PC **(90)** en les associant à leur siège respectif, les données "C7" respectives
- étant sauvegardées **(80.1, 92a)** via une ligne de transmission de données **(87)** ou :
- étant sauvegardées de manière intermédiaire dans un support informatique **(92)** d'un lecteur de disques **(91)** en tant que mémoire supplémentaire et dont les données "C7", en cas de nécessité, peuvent être lues à travers ledit lecteur de disques **(91),** lesdites données étant sauvegardées dans le support de mémoire **(80.1, 92a)** via une ligne de transmission de données PC **(87a).**

15. Dispositif selon au moins l'une des revendications 1 à 5, 7 à 14, **caractérisé en ce que**, à la fin du voyage, le programme **(80.3)** génère :
- un enregistrement "C1" à "C5" des passa ers ceinturés et/ou non ceinturés à partir des données "C2" à "C5" conjointement avec la date "C1", ou :
- un enregistrement "C1" à "C5" et "C7" des passagers ceinturés et/ou non ceinturés à partir des données "C2" à "C5" et "C7" conjointement avec la date "C1"
et les sauvegarde dans le support de mémoire **(80.1, 92a).**

16. Dispositif selon au moins l'une des revendications 1 à 5, 7 à 15, **caractérisé en ce qu'**une mise en garde affichée automatiquement sur l'écran **(88, 88a)** et/ou transmise automatiquement par haut-parleur **(78)** est uniquement dirigée aux passagers n'ayant pas attaché leur ceinture.

17. Dispositif selon au moins l'une des revendications 1 à 5, 7 à 16, **caractérisé en ce que**, en cas de dépassement d'au moins une des valeurs seuils auxquelles sont soumises trois accélérations translationnelles et trois accélérations rotatives du moyen de transport, l'accéléromètre **(52, 52a, 55)** libère un signal électrique **(46.1)** dans la ligne de signalisation **(86),** le programme **(80.3)** activé par ledit signal **(46.1)** réalisant une sauvegarde des données,
- enregistrant une température extérieure, l'heure de l'accident et l'évolution d'une vitesse d'impact, l'accélération d'impact, les vitesses de lacet, de roulis et de tangage ainsi que l'accélération de lacet, de roulis et de tangage pendant la durée de l'accident en tant que données "C6" relatives audit accident ; et :
- générant un enregistrement de données d'accident "C1" à "C6" des passagers ceinturés et/ou non ceinturés constitué des données "C2" et "C6" relatives à l'accident, des données "C3" à "C5" et de la date "C1", ou un enregistrement de données d'accident "C1" à "C7" des passagers ceinturés et/ou non ceinturés constitué des données "C2" et "C6" relatives à l'accident et des données "C3" à "C5" et "C7" et de la date "C1" et les sauvegardant dans le support de mémoire **(80.1, 92a),**
dans laquelle les données d'accident "C6" relatives aux passagers non ceinturés sont vides.

18. Dispositif selon la revendication 17, **caractérisé en ce qu'**une collision ou une turbulence multiples sont enregistrées au moyen :
- d'un capteur 3D réutilisable **(52)** dont la masse **(52.1)** retourne automatiquement de sa position de fonctionnement à sa position de repos après avoir réalisé une sauvegarde des données, étant de nouveau opérationnel ; ou :
- un bloc de commande réutilisable **(55)** étant de nouveau opérationnel après avoir réalisé une sauvegarde des données.

19. Dispositif selon au moins l'une des revendications 13 à 18, **caractérisé en ce que** :
- l'enregistrement des données "C1" à "C5" relatives aux ceintures de sécurité usées **(1, 1e),**
- l'enregistrement des données "C1" à "C5" ou "C1" à "C5" et "C7" des passagers ceinturés et/ou non ceinturés et/ou :
- l'enregistrement des données d'accident "C1" à "C6" ou "C1" à "C7" des passagers ceinturés et/ou non ceinturés
sont affichés sur l'écran **(88, 88a)** après avoir appuyé sur une touche de manipulation **(89).**

20. Dispositif selon au moins l'une des revendications 13 à 19, **caractérisé en ce que** :
- une série d'enregistrements de données "C1" à "C5" relatives aux ceintures de sécurité usées **(1, 1e),**
- une série d'enregistrements de données "C1" à "C5" ou "C1" à "C5" et "C7" des passagers ceinturés et/ou non ceinturés, et/ou :
- une série d'enregistrements de données d'accident "C1" à "C6" ou "C1" à "C7" des passagers ceinturés et/ou non ceinturés
relatifs à tous les voyages du premier jusqu'au dernier sont sauvegardés dans la mémoire du support **(80.1, 92a) ;** en cas de saturation de ladite mémoire, celle-ci est vidée par le programme **(80.3)** qui :
- protège automatiquement l'enregistrement des données "C1" à "C5" ou "C1" à "C5" et "C7" des passagers ceinturés et/ou non ceinturés relatifs au dernier voyage contre la suppression ;
- supprime exclusivement et de manière automatique les enregistrements des données "C1" à "C5" ou "C1" à "C5" et "C7" des passagers ceinturés et/ou non ceinturés
> relatifs au premier voyage et aux voyages suivants jusqu'à ce que la capacité de la mémoire soit suffisante pour mémoriser les enregistrements des données d'un nouveau voyage et d'au moins un nouvel accident ou :
> relatifs au premier voyage jusqu'à l'avant-dernier,
les données "C1" à "C5" ou "C1" à "C5" et "C7" étant vides par défaut.

21. Dispositif selon au moins l'une des revendications 13 à 19, **caractérisé en ce que**, après un redémarrage, l'enregistrement des données "C1" à "C5" ou "C1" à "C5" et "C7" des passagers ceinturés et/ou non ceinturés relatifs au premier voyage jusqu'à l'avant-dernier sont supprimés au moyen d'une interrogation
*"OUI" ou "NON" effacer l'enregistrement de données "C1" à "C5" ou "C1" à "C5" et "C7" du voyage n° "n" le 20.01.2003 (dd/mm/yyyy)?*,
"n" = "1" jusqu'à "m", affichée sur l'écran **(88**, **88a)** après avoir appuyé sur la touche de manipulation **(89)**, lesdits enregistrements étant supprimé en validant par "OUI" et les données "C1" à "C5" ou "C1" à "C5" et "C7" étant vides par défaut, le programme **(80.3)** protégeant automatiquement contre la suppression l'enregistrement des données "C1" à "C5" ou "C1" à "C5" et "C7" des passagers ceinturés et/ou non ceinturés relatifs au dernier voyage.

22. Procédé destiné à protéger les preuves et données relatives à un accident contre la manipulation selon au moins l'une des revendications 1 à 5, 7 à 21, **caractérisé en ce que** :
- l'enregistrement des données "C1" à "C5" relatives aux ceintures de sécurité usées **(1, 1e),**
- l'enregistrement des données "C1" à "C5" ou "C1" à "C5" et "C7" des passagers ceinturés et/ou non ceinturés et relatifs au dernier voyage, et/ou :
- l'enregistrement ou les enregistrements des données d'accident "C1" à "C6" ou "C1" à "C7" des passagers ceinturés et/ou non ceinturés
sont sauvegardés dans le support de mémoire **(80.1, 92, 92a)** et/ou dans une boîte noire **(34)** du moyen de transport relatives aux données d'accident.

23. Dispositif selon au moins l'une des revendications 1 à 5, 7 à 22, **caractérisé en ce que** sur un coussin du siège **(3.1)** et/ou sur un dossier de siège **(3.2)** est monté au moins un capteur **(31, 32)** relevant le poids du passager assis, un signal électrique annulant un blocage d'un interrupteur de blocage **(33, 33a)** relatif à la circulation du courant du capteur **(52, 52a)** du câble électrique **(71, 71a)** en passant par les câbles électriques **(72, 72a; 73, 73a)** jusqu'aux câbles électriques **(75, 75a).**
